(19) Europäisches Patentamt / European Patent Office / Office européen des brevets

(11) **EP 3 103 994 A2**

(12) **EUROPEAN PATENT APPLICATION**

(43) Date of publication:
**14.12.2016 Bulletin 2016/50**

(51) Int Cl.:
*F02D 41/24* (2006.01)     *F02D 41/14* (2006.01)

(21) Application number: **16173622.8**

(22) Date of filing: **09.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.06.2015   JP 2015118549**

(71) Applicant: **Toyota Jidosha Kabushiki Kaisha Toyota-shi, Aichi-ken, 471-8571 (JP)**

(72) Inventors:
  • **SUZUKI, Kenji**
    **TOYOTA-SHI, AICHI-KEN, 471-8571 (JP)**
  • **OKAZAKI, Shuntaro**
    **TOYOTA-SHI, AICHI-KEN, 471-8571 (JP)**
  • **MIYAMOTO, Hiroshi**
    **TOYOTA-SHI, AICHI-KEN, 471-8571 (JP)**
  • **IWAZAKI, Yasushi**
    **TOYOTA-SHI, AICHI-KEN, 471-8571 (JP)**
  • **KIDOKORO, Toru**
    **TOYOTA-SHI, AICHI-KEN, 471-8571 (JP)**

(74) Representative: **Intès, Didier Gérard André et al Cabinet Beau de Loménie**
    **158 rue de l'Université**
    **75340 Paris Cedex 07 (FR)**

(54)    **INTERNAL COMBUSTION ENGINE**

(57)     An internal combustion engine comprises an upstream side air-fuel ratio sensor, a downstream side air-fuel ratio sensor, an air-fuel ratio control means, a learning means and an abnormality judging means. When the air-fuel ratio control means sets the target air-fuel ratio to a first side, a rich or a lean side, if it is judged that the air-fuel ratio of the outflowing exhaust gas is maintained at a second side, opposite to the first side, for a predetermined air-fuel ratio maintenance judgment time or more, the learning means corrects a parameter relating to the feedback control so that the air-fuel ratio of the inflowing exhaust gas changes to the first side. A correction amount of the parameter at the stuck learning is made small when the abnormality judging means judges that the downstream side air-fuel ratio sensor exhibits abnormal response delay.

FIG. 12

RICH CONTROL   LEAN CONTROL   RICH CONTROL

CONTROL CENTER AIR-FUEL RATIO AFR — 14.6

AIR-FUEL RATIO CORRECTION AMOUNT AFC — AFClean / 0 / AFCrich

UPSTREAM SIDE SENSOR OUTPUT AIR-FUEL RATIO AFup — 14.6

DOWNSTREAM SIDE SENSOR OUTPUT AIR-FUEL RATIO AFdwn — 14.6 / AFrich

CUMULATIVE OXYGEN EXCESS/DEFICIENCY $\Sigma$ OED — OEDref / 0

FB LEARNING VALUE sfbg — 0

Trich

$t_0$   $t_1$   $t_2$   $t_3$

**Description**

Technical Field

The present disclosure relates to an internal combustion engine and to a method of controlling an internal combustion engine.

Background Art

Known in the past has been an internal combustion engine configured with an exhaust passage in which an air-fuel ratio sensor is provided and using an output of this air-fuel ratio sensor as the basis to make an air-fuel ratio of exhaust gas flowing into an exhaust purification catalyst become a target air-fuel ratio (for example, the stoichiometric air-fuel ratio (14.6)) by feedback control of an amount of fuel fed to a combustion chamber of the internal combustion engine.

In the internal combustion engine described in PLT 1, an upstream side air-fuel ratio sensor is arranged at an upstream side of the exhaust purification catalyst in the direction of exhaust flow and a downstream side air-fuel ratio sensor is arranged at a downstream side of the exhaust purification catalyst in the direction of exhaust flow. In such an internal combustion engine, the target air-fuel ratio of the exhaust gas flowing into the exhaust purification catalyst is alternatively switched between a rich set air-fuel ratio richer than the stoichiometric air-fuel ratio and a lean set air-fuel ratio leaner than the stoichiometric air-fuel ratio. Specifically, the target air-fuel ratio is switched from the rich set air-fuel ratio to the lean set air-fuel ratio when the air-fuel ratio detected by the downstream side air-fuel ratio sensor becomes the rich judged air-fuel ratio richer than the stoichiometric air-fuel ratio or becomes less, then is changed from the lean set air-fuel ratio to the rich set air-fuel ratio when an oxygen storage amount of the exhaust purification catalyst becomes a predetermined switching reference storage amount or more.

Citations List

Patent Literature

    PLT 1: International Patent Publication No. 2014/118892A PLT 2: Japanese Patent Publication No. 63-302161A
    PLT 3: Japanese Patent Publication No. 63-306248A
    PLT 4: Japanese Patent Publication No. 2006-77659A

Summary of Disclosure

Technical Problem

In this regard, an air-fuel ratio sensor gradually deteriorates along with use and sometimes changes in gain characteristic. For example, if the gain characteristic of the upstream side air-fuel ratio sensor 40 changes, sometimes the output air-fuel ratio of the upstream side air-fuel ratio sensor 40 will deviate from the actual air-fuel ratio of the exhaust gas. In this case, the output air-fuel ratio of the upstream side air-fuel ratio sensor 40 will deviate to the rich side or the lean side from the actual air-fuel ratio of the exhaust gas.

Further, in unburned gas, hydrogen is fast in speed of passage through a diffusion regulating layer of the air-fuel ratio sensor. For this reason, if the concentration of hydrogen in the exhaust gas is high, the output air-fuel ratio of the upstream side air-fuel ratio sensor 40 ends up deviating to the lower side from the actual air-fuel ratio of the exhaust gas (that is, the rich side).

If the output air-fuel ratio of the upstream side air-fuel ratio sensor 40 greatly deviates to the lean side, due to the feedback control based on the deviated output air-fuel ratio, even if the target air-fuel ratio is set to the lean set air-fuel ratio, the actual exhaust air-fuel ratio sometimes becomes a value richer than the stoichiometric air-fuel ratio. On the other hand, if the output air-fuel ratio of the upstream side air-fuel ratio sensor 40 greatly deviates to the rich side, due to the feedback control based on the deviated output air-fuel ratio, even if the target air-fuel ratio is set to the rich set air-fuel ratio, the actual exhaust air-fuel ratio sometimes becomes a value leaner than the stoichiometric air-fuel ratio. In these cases, the target air-fuel ratio is not switched between the rich air-fuel ratio and the lean air-fuel ratio, the exhaust air-fuel ratio is maintained at a value richer or leaner than the stoichiometric air-fuel ratio, and the exhaust emission deteriorates.

Therefore, the inventors of the present application propose the following "stuck learning control". In this control, when the target air-fuel ratio is set to the lean set air-fuel ratio, if the air-fuel ratio detected by the downstream side air-fuel ratio sensor is maintained at an air-fuel ratio richer than the rich judged air-fuel ratio over a predetermined time or more, a parameter relating to feedback control is corrected so that the air-fuel ratio of the exhaust gas flowing into the exhaust purification catalyst changes to the lean side as "rich stuck learning". Further, when the target air-fuel ratio is set to the rich set air-fuel ratio, if the air-fuel ratio detected by the downstream side air-fuel ratio sensor is maintained at an air-fuel ratio leaner than the lean judged air-fuel ratio over a predetermined time or more, a parameter relating to feedback control is corrected so that the air-fuel ratio of the exhaust gas flowing into the exhaust purification catalyst changes to the rich side as "lean stuck learning". Due to this, even when deviation occurs in the output air-fuel ratio of the upstream side air-fuel ratio sensor, the target air-fuel ratio can be alternately switched between the rich set air-fuel ratio and the lean set air-fuel ratio. Note that, the "rich judged air-fuel ratio" is an air-fuel ratio slightly richer than the stoichiometric air-fuel ratio, while the "lean judged air-fuel ratio" is an air-fuel ratio slightly leaner than the stoichiometric air-fuel ratio.

However, even if no deviation occurs in the output air-fuel ratio of the upstream side air-fuel ratio sensor, sometimes abnormal response delay of the downstream side air-fuel ratio sensor causes stuck learning to be mistakenly performed. That is, when the target air-fuel ratio is set to the lean set air-fuel ratio, sometimes abnormal response delay of the downstream side air-fuel ratio sensor causes the air-fuel ratio detected by downstream side air-fuel ratio sensor to be maintained at an air-fuel ratio richer than the rich judged air-fuel ratio for a predetermined time or more. In this case, stuck learning is mistakenly performed. Similarly, when the target air-fuel ratio is set to the rich set air-fuel ratio, sometimes the air-fuel ratio detected by the downstream side air-fuel ratio sensor is maintained at an air-fuel ratio leaner than the lean judged air-fuel ratio for a predetermined time or more. In this case as well, similarly stuck learning is mistakenly performed. If stuck learning is mistakenly performed, the exhaust air-fuel ratio will deviate from the target air-fuel ratio, so the exhaust emission is liable to deteriorate.

To keep stuck learning from being mistakenly performed in this way, it may be considered to prohibit stuck learning if the downstream side air-fuel ratio sensor exhibits abnormal response delay. However, if prohibiting stuck learning, if deviation occurs in the output air-fuel ratio of the upstream side air-fuel ratio sensor, the exhaust air-fuel ratio will be maintained at a value richer or leaner than the stoichiometric air-fuel ratio and the exhaust emission will deteriorate.

Therefore, in view of this problem, an object of the present disclosure is to provide an internal combustion engine which can suppress deterioration of the exhaust emission even when the downstream side air-fuel ratio sensor exhibits abnormal response delay.

Solution to Problem

In order to solve the above problem, in a first embodiment of the disclosure, there is provided an internal combustion engine comprising: an exhaust purification catalyst arranged in an exhaust passage and able to store oxygen, an upstream side air-fuel ratio sensor arranged at an upstream side of the exhaust purification catalyst in the direction of exhaust flow and configured to detect an air-fuel ratio of inflowing exhaust gas flowing into the exhaust purification catalyst, a downstream side air-fuel ratio sensor arranged at a downstream side of the exhaust purification catalyst in the direction of exhaust flow and configured to detect an air-fuel ratio of outflowing exhaust gas flowing out from the exhaust purification catalyst, an air-fuel ratio control means configured to set a target air-fuel ratio of the inflowing exhaust gas and to control by feedback an amount of fuel fed to a combustion chamber so that an air-fuel ratio detected by the upstream side air-fuel ratio sensor matches the target air-fuel ratio, a learning means configured to correct a parameter relating to the feedback control based on the air-fuel ratio detected by the downstream side air-fuel ratio sensor so that a deviation in the feedback control between the target air-fuel ratio and an actual air-fuel ratio of the inflowing exhaust gas is reduced, and an abnormality judging means configured to judge whether the downstream side air-fuel ratio sensor exhibits abnormal response delay, wherein when the air-fuel ratio control means sets the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, the learning means is configured to correct a parameter so that the actual air-fuel ratio of the inflowing exhaust gas changes to the first side as stuck learning, and to make a correction amount of the parameter at the stuck learning, when the abnormality judging means judges that the downstream side air-fuel ratio sensor exhibits abnormal response delay, smaller than a correction amount of the parameter in the stuck learning when the abnormality judging means judges that the downstream side air-fuel ratio sensor does not exhibit abnormal response delay.

In order to solve the above problem, in a second embodiment of the disclosure, there is provided an internal combustion engine comprising: an exhaust purification catalyst arranged in an exhaust passage and able to store oxygen, an upstream side air-fuel ratio sensor arranged at an upstream side of the exhaust purification catalyst in the direction of exhaust flow and configured to detect an air-fuel ratio of inflowing exhaust gas flowing into the exhaust purification catalyst, a downstream side air-fuel ratio sensor arranged at a downstream side of the exhaust purification catalyst in the direction of exhaust flow and configured to detect an air-fuel ratio of outflowing exhaust gas flowing out from the exhaust purification catalyst, an air-fuel ratio control means configured to set a target air-fuel ratio of the inflowing exhaust gas and to control by feedback an amount of fuel fed to a combustion chamber so that an air-fuel ratio detected by the upstream side air-fuel ratio sensor matches the target air-fuel ratio, a learning means configured to correct a parameter relating to the feedback control based on the air-fuel ratio detected by the downstream side air-fuel ratio sensor so that a deviation in the feedback control between the target air-fuel ratio and an actual air-fuel ratio of the inflowing exhaust gas is reduced, and an abnormality judging means configured to judge whether the downstream side air-fuel ratio sensor exhibits abnormal response delay, wherein when the air-fuel ratio control means sets the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, the learning means is configured to correct a parameter so that the actual air-fuel ratio of the inflowing exhaust gas changes to the first side as stuck learning, and to make the air-fuel ratio maintenance judgment time, when the abnormality judging means judges that the downstream side air-fuel ratio sensor exhibits abnormal response delay, longer than the air-fuel ratio maintenance judgment time when the abnormality judging means judges that the downstream side air-fuel ratio sensor does not exhibit abnormal response delay.

In an aspect of the disclosure, which is compatible with both the first and the second embodiment, the air-fuel ratio control means is configured to set the target ratio to an air-fuel ratio richer than the stoichiometric air-fuel ratio at a time of an end of fuel cut control when the feed of fuel to a combustion chamber is ended, and the abnormality judging means is the abnormality judging means judge that the downstream side air-fuel ratio sensor exhibits abnormal response delay if a time from when the target air-fuel ratio is set to the rich air-fuel ratio to when the air-fuel ratio of the outflowing exhaust gas becomes the stoichiometric air-fuel ratio is a predetermined reference time or more. Furthermore the disclosure relates to a method of controlling an internal combustion engine comprising:

an exhaust purification catalyst arranged in an exhaust passage and able to store oxygen,
an upstream side air-fuel ratio sensor arranged at an upstream side of the exhaust purification catalyst in the direction of exhaust flow and configured to detect an air-fuel ratio of inflowing exhaust gas flowing into the exhaust purification catalyst,
a downstream side air-fuel ratio sensor arranged at a downstream side of the exhaust purification catalyst in the direction of exhaust flow and configured to detect an air-fuel ratio of outflowing exhaust gas flowing out from the exhaust purification catalyst.

The method comprises the steps of:

setting a target air-fuel ratio of the inflowing exhaust gas and controlling by feedback an amount of fuel fed to a combustion chamber so that an air-fuel ratio detected by the upstream side air-fuel ratio sensor matches the target air-fuel ratio,
correcting a parameter relating to the feedback control based on the air-fuel ratio detected by the downstream side air-fuel ratio sensor so that a deviation in the feedback control between the target air-fuel ratio and an actual air-fuel ratio of the inflowing exhaust gas is reduced, and
judging whether the downstream side air-fuel ratio sensor exhibits abnormal response delay, wherein when setting the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, a parameter is corrected so that the actual air-fuel ratio of the inflowing exhaust gas changes to the first side as stuck learning, and
a correction amount of the parameter at the stuck learning, when it is judged that the downstream side air-fuel ratio sensor exhibits abnormal response delay, is made smaller than a correction amount of the parameter in the stuck learning, when it is judged that the downstream side air-fuel ratio sensor does not exhibit abnormal response delay.

Moreover the disclosure relates to a method of controlling an internal combustion engine comprising:

an exhaust purification catalyst arranged in an exhaust passage and able to store oxygen,
an upstream side air-fuel ratio sensor arranged at an upstream side of the exhaust purification catalyst in the direction of exhaust flow and configured to detect an air-fuel ratio of inflowing exhaust gas flowing into the exhaust purification catalyst,
a downstream side air-fuel ratio sensor arranged at a downstream side of the exhaust purification catalyst in the direction of exhaust flow and configured to detect an air-fuel ratio of outflowing exhaust gas flowing out from the exhaust purification catalyst,

The method comprises the steps of:

setting a target air-fuel ratio of the inflowing exhaust gas and controlling by feedback an amount of fuel feed fed to a combustion chamber so that an air-fuel ratio detected by the upstream side air-fuel ratio sensor matches the target air-fuel ratio,
correcting a parameter relating to the feedback control based on the air-fuel ratio detected by the downstream side air-fuel ratio sensor so that a deviation in the feedback control between the target air-fuel ratio and an actual air-fuel ratio of the inflowing exhaust gas is reduced, and
judging whether the downstream side air-fuel ratio sensor exhibits abnormal response delay, wherein
when setting the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, a parameter is corrected so that the actual air-fuel ratio of the inflowing exhaust gas changes to the first side as stuck learning, and
the air-fuel ratio maintenance judgment time, when it is judged that the downstream side air-fuel ratio sensor exhibits abnormal response delay, is made longer than the air-fuel ratio maintenance judgment time, when it is judged that the downstream side air-fuel ratio sensor does not exhibit abnormal response delay.
the target ratio may be set to an air-fuel ratio richer than the stoichiometric air-fuel ratio at the time of the end of fuel cut control when the feed of fuel to a combustion chamber is ended.

It may be judged that the downstream side air-fuel ratio sensor exhibits abnormal response delay, if a time from when the target air-fuel ratio is set to the rich air-fuel ratio to when the air-fuel ratio of the outflowing exhaust gas becomes the stoichiometric air-fuel ratio is a predetermined reference time or more.

Advantageous Effects of the Disclosure

According to the present disclosure, there is provided an internal combustion engine which can suppress deterioration of the exhaust emission even when the downstream side air-fuel ratio sensor exhibits abnormal response delay.

Brief Description of Drawings

[FIG. 1] FIG. 1 is a view schematically showing an internal combustion engine of the present disclosure.
[FIG. 2] FIG. 2 is a view showing a relationship between an oxygen storage amount of an exhaust purification catalyst and a concentration of $NO_x$ or a concentration of HC and CO in exhaust gas flowing out from an exhaust purification catalyst.
[FIG. 3] FIG. 3 is a view showing a relationship between a sensor applied voltage and output current at different exhaust air-fuel ratios.
[FIG. 4] FIG. 4 is a view showing a relationship between an exhaust air-fuel ratio and output current when making the sensor applied voltage constant.
[FIG. 5] FIG. 5 is a time chart of the air-fuel ratio correction amount relating to the target air-fuel ratio etc. when performing basic air-fuel ratio control.
[FIG. 6] FIG. 6 is a time chart of the air-fuel ratio correction amount, etc., when a large deviation occurs in the output value of an upstream side air-fuel ratio sensor.
[FIG. 7] FIG. 7 is a time chart of the air-fuel ratio correction amount, etc., when a large deviation occurs in the output value of an upstream side air-fuel ratio sensor.
[FIG. 8] FIG. 8 is a time chart of the air-fuel ratio correction amount, etc., when performing stoichiometric air-fuel ratio stuck learning.
[FIG. 9] FIG. 9 is a time chart of the air-fuel ratio correction amount, etc., when performing lean stuck learning etc.
[FIG. 10] FIG. 10 is a time chart of the air-fuel ratio correction amount relating to the target air-fuel ratio etc. when performing fuel cut control.
[FIG. 11] FIG. 11 is a time chart of the air-fuel ratio correction amount relating to the target air-fuel ratio, etc., when performing fuel cut control in the case where a downstream side air-fuel ratio sensor exhibits abnormal response delay.

[FIG. 12] FIG. 12 is a time chart of the air-fuel ratio correction amount relating to the target air-fuel ratio, etc., when performing basic air-fuel ratio control in the case where a downstream side air-fuel ratio sensor exhibits abnormal response delay.

[FIG. 13] FIG. 13 is a flow chart showing a control routine of processing for correcting a learning update amount.

[FIG. 14] FIG. 14 is a time chart of the air-fuel ratio correction amount relating to the target air-fuel ratio, etc., when performing basic air-fuel ratio control in the case where a downstream side air-fuel ratio sensor exhibits abnormal response delay.

[FIG. 15] FIG. 15 is a flow chart showing a control routine of processing for correcting an air-fuel ratio maintenance judgment time.

Description of Embodiments

Referring to the drawings, an embodiment of the present disclosure will be explained in detail below. Note that, in the following explanation, similar component elements are assigned the same reference numerals.

<First embodiment>

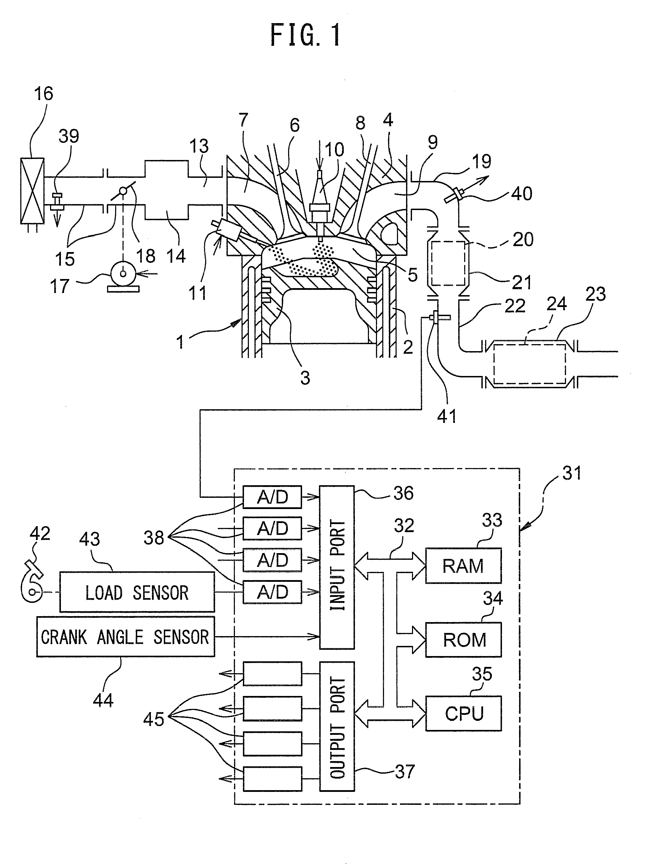

First, referring to FIGS. 1-13, a first embodiment of the present disclosure will be explained.

<Explanation of Internal Combustion Engine as a Whole>

FIG. 1 is a view which schematically shows an internal combustion engine in an embodiment of the present disclosure. Referring to FIG. 1, 1 indicates an engine body, 2 a cylinder block, 3 a piston which reciprocates inside the cylinder block 2, 4 a cylinder head which is fastened to the cylinder block 2, 5 a combustion chamber which is formed between the piston 3 and the cylinder head 4, 6 an intake valve, 7 an intake port, 8 an exhaust valve, and 9 an exhaust port. The intake valve 6 opens and closes the intake port 7, while the exhaust valve 8 opens and closes the exhaust port 9.

As shown in FIG. 1, at the center part of the inside wall surface of the cylinder head 4, a spark plug 10 is arranged. A fuel injector 11 is arranged around the inside wall surface of the cylinder head 4. The spark plug 10 is configured to cause generation of a spark in accordance with an ignition signal. Further, the fuel injector 11 injects a predetermined amount of fuel into the combustion chamber 5 in accordance with an injection signal. Note that, the fuel injector 11 may be arranged so as to inject fuel inside the intake port 7. Further, in the present embodiment, as the fuel, gasoline with a stoichiometric air-fuel ratio of 14.6 is used. However, in the internal combustion engine of the present disclosure, another fuel may also be used.

The intake port 7 in each cylinder is connected through a corresponding intake runner 13 to a surge tank 14. The surge tank 14 is connected through an intake pipe 15 to an air cleaner 16. The intake port 7, intake runner 13, surge tank 14, and intake pipe 15 form an intake passage. Further, inside the intake pipe 15, a throttle valve 18 which is driven by a throttle valve drive actuator 17 is arranged. The throttle valve 18 can be turned by the throttle valve drive actuator 17 to thereby change the opening area of the intake passage.

On the other hand, the exhaust port 9 in each cylinder is connected to an exhaust manifold 19. The exhaust manifold 19 has a plurality of runners which are connected to the exhaust ports 9 and a header at which these runners are collected. The header of the exhaust manifold 19 is connected to an upstream side casing 21 which has an upstream side exhaust purification catalyst 20 built into it. The upstream side casing 21 is connected through an exhaust pipe 22 to a downstream side casing 23 which has a downstream side exhaust purification catalyst 24 built into it. The exhaust port 9, exhaust manifold 19, upstream side casing 21, exhaust pipe 22, and downstream side casing 23 form an exhaust passage.

The electronic control unit (ECU) 31 is comprised of a digital computer which is provided with components which are connected together through a bidirectional bus 32 such as a RAM (random access memory) 33, ROM (read only memory) 34, CPU (microprocessor) 35, input port 36, and output port 37. In the intake pipe 15, an air flow meter 39 is arranged for detecting the flow rate of air which flows through the intake pipe 15. The output of this air flow meter 39 is input through a corresponding AD converter 38 to the input port 36. Further, at the header of the exhaust manifold 19, i.e., at the upstream side of the upstream side exhaust purification catalyst 20 in a direction of exhaust flow, an upstream side air-fuel ratio sensor 40 is arranged which detects the air-fuel ratio of the exhaust gas which flows through the inside of the exhaust manifold 19 (that is, the exhaust gas which flows into the upstream side exhaust purification catalyst 20). In addition, in the exhaust pipe 22, i.e., at the downstream side of the upstream side exhaust purification catalyst 20 in a direction of exhaust flow, a downstream side air-fuel ratio sensor 41 is arranged which detects the air-fuel ratio of the exhaust gas flowing through the inside of the exhaust pipe 22 (that is, the exhaust gas which flows out from the upstream side exhaust purification catalyst 20 and flows into the downstream side exhaust purification catalyst 24). The outputs of these air-fuel ratio sensors 40 and 41 are also input through the corresponding AD converters 38 to the input port 36.

Further, an accelerator pedal 42 has a load sensor 43 connected to it which generates an output voltage which is proportional to the amount of depression of the accelerator pedal 42. The output voltage of the load sensor 43 is input to the input port 36 through a corresponding AD converter 38. The crank angle sensor 44 generates an output pulse every time, for example, a crankshaft rotates by 15 degrees. This output pulse is input to the input port 36. The CPU 35 calculates the engine speed from the output pulse of this crank angle sensor 44. On the other hand, the output port 37 is connected through corresponding drive circuits 45 to the spark plugs 10, fuel injectors 11, and throttle valve drive actuator 17. Note that, ECU 31 acts as a control system for controlling the internal combustion engine.

Note that, although the internal combustion engine according to the present embodiment is a non-supercharged internal combustion engine using gasoline as a fuel, the construction of the internal combustion engine according to the present disclosure is not limited to the above construction. For example, an arrangement of cylinders, a method of injecting a fuel, constructions of intake and exhaust system, constructions of valve gears, presence or absence of a supercharger, a construction of a supercharger, etc. in the internal combustion engine according to the present disclosure may be different form the above internal combustion engine.

<Explanation of Exhaust Purification Catalyst>

The upstream side exhaust purification catalyst 20 and the downstream side exhaust purification catalyst 24 which are arranged at the exhaust passage have a similar construction. The upstream side exhaust purification catalyst 20 and the downstream side exhaust purification catalyst 24 are three-way catalysts which have oxygen storage abilities. Specifically, the exhaust purification catalysts 20 and 24 are comprised of carriers comprised of ceramic on which a precious metal having a catalytic action (for example, platinum (Pt)) and a substance having an oxygen storage ability (for example, ceria ($CeO_2$)) are carried. The exhaust purification catalysts 20 and 24 exhibit a catalytic action of simultaneously removing unburned gas (HC, CO, etc.) and nitrogen oxides ($NO_x$) when reaching a predetermined activation temperature and, in addition, an oxygen storage ability.

According to the oxygen storage ability of the exhaust purification catalysts 20 and 24, the exhaust purification catalysts 20 and 24 store the oxygen in the exhaust gas when the air-fuel ratio of the exhaust gas flowing into the exhaust purification catalysts 20 and 24 is an air-fuel ratio leaner than the stoichiometric air-fuel ratio (lean air-fuel ratio). On the other hand, the exhaust purification catalysts 20 and 24 release the oxygen stored in the exhaust purification catalysts 20 and 24 when the inflowing exhaust gas has an air-fuel ratio richer than the stoichiometric air-fuel ratio (rich air-fuel ratio).

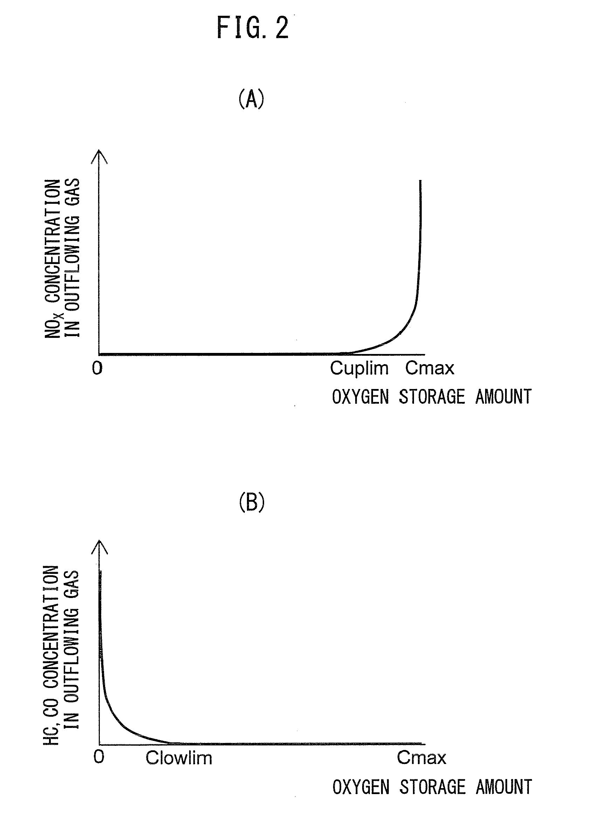

The exhaust purification catalysts 20 and 24 have a catalytic action and oxygen storage ability and thereby have the action of removing $NO_x$ and unburned gas according to the stored amount of oxygen. That is, if the air-fuel ratio of the exhaust gas which flows into the exhaust purification catalysts 20 and 24 is a lean air-fuel ratio, as shown in FIG. 2A, when the stored amount of oxygen is small, the exhaust purification catalysts 20 and 24 store the oxygen in the exhaust gas. Further, along with this, the $NO_x$ in the exhaust gas is removed by reduction. Further, if the stored amount of oxygen becomes larger, the exhaust gas which flows out from the exhaust purification catalysts 20 and 24 rapidly rises in concentration of oxygen and $NO_x$ at a certain stored amount near the maximum storable oxygen amount Cmax (in the figure, Cuplim).

On the other hand, if the air-fuel ratio of the exhaust gas which flows into the exhaust purification catalysts 20 and 24 is the rich air-fuel ratio, as shown in FIG. 2B, when the stored amount of oxygen is large, the oxygen which is stored in the exhaust purification catalysts 20 and 24 is released, and the unburned gas in the exhaust gas is removed by oxidation.

As explained above, according to the exhaust purification catalysts 20, 24 used in the embodiments, the characteristic of removal of $NO_x$ and unburned gas in the exhaust gas changes in accordance with the air-fuel ratio of the exhaust gas flowing into the exhaust purification catalysts 20, 24 and the oxygen storage amount. Note that, so long as having a catalytic action and oxygen storage ability, the exhaust purification catalysts 20, 24 may also be catalysts different from three-way catalysts.

<Output Characteristics of Air-Fuel Ratio Sensors>

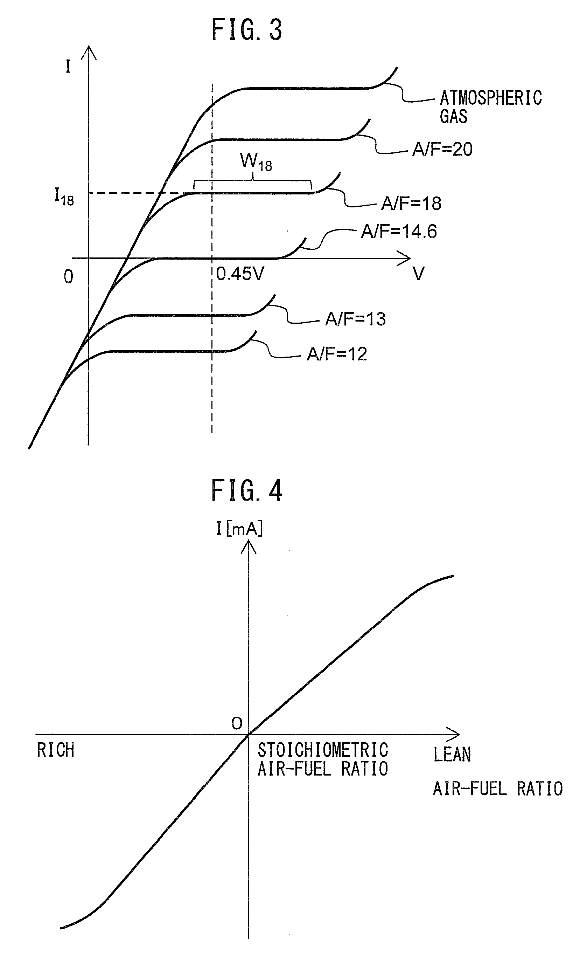

Next, referring to FIG. 3 and FIG. 4, the output characteristics of the air-fuel ratio sensors 40, 41 in the present embodiment will be explained. FIG. 3 is a view showing the voltage-current (V-I) characteristics of the air-fuel ratio sensors 40, 41 in the present embodiment, while FIG. 4 is a view showing the relationship between the air-fuel ratio of the exhaust gas circulating around the air-fuel ratio sensors 40, 41 (below, referred to as the "exhaust air-fuel ratio") and the output current I when maintaining the applied voltage constant. Note that, in the present embodiment, as the air-fuel ratio sensors 40, 41, the same configurations of air-fuel ratio sensors are used.

As will be understood from FIG. 3, in the air-fuel ratio sensors 40, 41 of the present embodiment, the output current I becomes larger the higher the exhaust air-fuel ratio (the leaner). Further, in the V-I line of each exhaust air-fuel ratio, there is a region substantially parallel to the V-axis, that is, a region where the output current does not change much at all even if the applied voltage changes. This voltage region is called the "limit current region". The current at this time is called the "limit current". In FIG. 3, the limit current region and the limit current when the exhaust air-fuel ratio is 18 are respectively shown by $W_{18}$ and $I_{18}$. Therefore, the air-fuel ratio sensors 40, 41 can be said to be limit current type air-fuel ratio sensors.

FIG. 4 is a view showing the relationship between the exhaust air-fuel ratio and the output current I when making the applied voltage 0.45V or so. As will be understood from FIG. 4, in the air-fuel ratio sensors 40, 41, the output current changes linearly (proportionally) with respect to the exhaust air-fuel ratio so that the higher the exhaust air-fuel ratio (that is, the leaner), the greater the output current I of the air-fuel ratio sensors 40, 41 becomes. In addition, the air-fuel ratio sensors 40, 41 are configured so that the output current I becomes zero when the exhaust air-fuel ratio is the stoichiometric air-fuel ratio. Further, when the exhaust air-fuel ratio becomes larger by a certain extent or more or when it becomes smaller by a certain extent or less, the ratio of the change of the output current with respect to the change of the exhaust air-fuel ratio becomes smaller.

Note that, in the above example, as the air-fuel ratio sensors 40, 41, limit current type air-fuel ratio sensors are used. However, so long as the output current linearly changes with respect to the exhaust air-fuel ratio, as the air-fuel ratio sensors 40, 41, it is also possible to use any other air-fuel ratio sensors such as air-fuel ratio sensors that are not the limit current type. Further, the air-fuel ratio sensors 40, 41 may also be air-fuel ratio sensors of structures different from each other.

<Basic Air Fuel Ratio Control>

Next, an outline of the basic air-fuel ratio control in a control device of an internal combustion engine of the present embodiment will be explained. The internal combustion engine of the present embodiment comprises an air-fuel ratio control means. The air-fuel ratio control means controls the fuel injection amount supplied from the fuel injector 11 to the combustion chamber 5 by feedback based on the output air-fuel ratio of the upstream side air-fuel ratio sensor 40 so that the output air-fuel ratio of the upstream side air-fuel ratio sensor 40 becomes the target air-fuel ratio. Note that, the "output air-fuel ratio" means the air-fuel ratio which corresponds to the output value of the air-fuel ratio sensor.

Further, the air-fuel ratio control means sets the target air-fuel ratio of the exhaust gas flowing into the upstream side air-fuel ratio sensor 42 (below, referred to simply as the "inflowing exhaust gas") based on the output air-fuel ratio of the downstream side air-fuel ratio sensor 41 etc. In the control for setting the target air-fuel ratio, when the output current of the downstream side air-fuel ratio sensor 41 becomes a rich air-fuel ratio, the target air-fuel ratio is made a lean set air-fuel ratio. After this, it is maintained at this air-fuel ratio. In this regard, the "lean set air-fuel ratio" is a predetermined air-fuel ratio which is leaner than the stoichiometric air-fuel ratio (air-fuel ratio serving as center of control) by a certain extent, and, for example, is 14.65 to 20, preferably 14.65 to 18, more preferably 14.65 to 16 or so. Further, the lean set air-fuel ratio can be expressed as an air-fuel ratio of the air-fuel ratio forming the center of control (in the present embodiment, stoichiometric air-fuel ratio) plus a lean correction amount. Further, in the present embodiment, when the output air-fuel ratio of the downstream side air-fuel ratio sensor 41 becomes a rich judged air-fuel ratio (for example, 14.55), which is slightly richer than the stoichiometric air-fuel ratio, or less, it is judged that the output air-fuel ratio of the downstream side air-fuel ratio sensor 41 has become the rich air-fuel ratio. In other words, in the present embodiment, when the output air-fuel ratio of the downstream side air-fuel ratio sensor 41 is larger than the rich judged air-fuel ratio, it is judged that the output air-fuel ratio of the downstream side air-fuel ratio sensor 41 is nearly the stoichiometric air-fuel ratio.

If the target air-fuel ratio is changed to the lean set air-fuel ratio, the oxygen excess/deficiency of the inflowing exhaust gas is cumulatively added. The "oxygen excess/deficiency" means the amount of the oxygen which becomes excessive or the amount of the oxygen which becomes deficient (amount of excess unburned gas etc.) when trying to make the air-fuel ratio of the inflowing exhaust gas the stoichiometric air-fuel ratio. In particular, when the target air-fuel ratio is the lean set air-fuel ratio, the inflowing exhaust gas becomes excessive in oxygen. This excess oxygen is stored in the upstream side exhaust purification catalyst 20. Therefore, the cumulative value of the oxygen excess/deficiency (below, referred to as the "cumulative oxygen excess/deficiency") can be said to express the estimated value of the stored amount of oxygen of the upstream side exhaust purification catalyst 20.

The oxygen excess/deficiency OED is, for example, calculated by the following formula (1):

$$ODE = 0.23 \times (AFup - AFR) \times Qi \quad ...(1)$$

where 0.23 indicates the concentration of oxygen in the air,

Qi indicates the amount of fuel injection, AFup indicates the output air-fuel ratio of the upstream side air-fuel ratio sensor 40, and AFR indicates the air-fuel ratio forming the center of control (in the present embodiment, stoichiometric air-fuel ratio (14.6)).

If the cumulative oxygen excess/deficiency which was obtained by cumulatively adding the oxygen excess/deficiency which was calculated in this way becomes a predetermined switching reference value (corresponding to a predetermined switching reference storage amount Cref) or more, the target air-fuel ratio which had up to then been the lean set air-fuel ratio is made the rich set air-fuel ratio and after that is maintained at that air-fuel ratio. The rich set air-fuel ratio is a predetermined air-fuel ratio which is richer than the stoichiometric air-fuel ratio (air-fuel ratio forming center of control) by a certain extent. For example, it is made 12 to 14.58, preferably 13 to 14.57, more preferably 14 to 14.55 or so. Further, the rich set air-fuel ratio can be expressed as an air-fuel ratio of the air-fuel ratio forming the center of control (in the present embodiment, stoichiometric air-fuel ratio) minus a rich correction amount. Note that, in the present embodiment, the difference of the rich set air-fuel ratio from the stoichiometric air-fuel ratio (rich degree) is made the difference of the lean set air-fuel ratio from the stoichiometric air-fuel ratio (lean degree) or less.

After that, when the output air-fuel ratio of the downstream side air-fuel ratio sensor 41 again becomes the rich judged air-fuel ratio or less, the target air-fuel ratio is again made the lean set air-fuel ratio. After that, a similar operation is repeated. In this way, in the present embodiment, the target air-fuel ratio of inflowing exhaust gas is alternately set to the lean set air-fuel ratio and the rich set air-fuel ratio.

However, even if performing control such as explained above, sometimes the actual oxygen storage amount of the upstream side exhaust purification catalyst 20 reaches the maximum storable oxygen amount before the cumulative oxygen excess/deficiency reaches the switching reference value. As the cause for this, for example, the fall of the maximum storable oxygen amount of the upstream side exhaust purification catalyst 20 or the temporary rapid change in the air-fuel ratio of the inflowing exhaust gas may be mentioned. If in this way the oxygen storage amount reaches the maximum storable oxygen amount, the lean air-fuel ratio exhaust gas flows out from the upstream side exhaust purification catalyst 20. Therefore, in the present embodiment, when the output air-fuel ratio of the downstream side air-fuel ratio sensor 41 becomes the lean air-fuel ratio before the cumulative oxygen excess/deficiency reaches the switching reference value, the target air-fuel ratio is switched to the rich set air-fuel ratio when the output air-fuel ratio of the downstream side air-fuel ratio sensor 41 becomes the lean air-fuel ratio. In particular, in the present embodiment, when the output air-fuel ratio of the downstream side air-fuel ratio sensor 41 becomes a lean judged air-fuel ratio slightly leaner than the stoichiometric air-fuel ratio (for example, 14.65) or becomes more, it is judged that the output air-fuel ratio of the downstream side air-fuel ratio sensor 41 has become the lean air-fuel ratio. In other words, in the present embodiment, when the output air-fuel ratio of the downstream side air-fuel ratio sensor 41 is smaller than the lean judged air-fuel ratio, it is judged that the output air-fuel ratio of the downstream side air-fuel ratio sensor 41 is substantially the stoichiometric air-fuel ratio. Therefore, in the present embodiment, when the output air-fuel ratio of the downstream side air-fuel ratio sensor 41 is smaller than the lean judged air-fuel ratio and is larger than the rich judged air-fuel ratio, it is judged that the air-fuel ratio of the outflowing exhaust gas is substantially the stoichiometric air-fuel ratio.

Further, even if performing control such as explained above, when the cumulative oxygen excess/deficiency reaches the switching reference value, sometimes the output air-fuel ratio of the downstream side air-fuel ratio sensor 41 has not reached the rich judged air-fuel ratio. As the cause for this, for example, the output of the upstream side air-fuel ratio sensor 40 deviating to the lean side may be mentioned. In this case, the air-fuel ratio of the exhaust gas flowing out from the upstream side exhaust purification catalyst 20 may be richer than the stoichiometric air-fuel ratio. For this reason, in the present embodiment, when the cumulative oxygen excess/deficiency reaches the switching reference value, if the output air-fuel ratio of the downstream side air-fuel ratio sensor 41 is maintained at the rich judged air-fuel ratio or less, the target air-fuel ratio is not switched to the rich set air-fuel ratio but is maintained at the lean set air-fuel ratio. That is, in the present embodiment, when the output air-fuel ratio of the downstream side air-fuel ratio sensor 41 becomes larger than the rich judged air-fuel ratio after the cumulative oxygen excess/deficiency reaches the switching reference value, the target air-fuel ratio is switched to the rich set air-fuel ratio when the output air-fuel ratio of the downstream side air-fuel ratio sensor 41 becomes larger than the rich judged air-fuel ratio.

<Explanation of Air-Fuel Ratio Control Using Time Chart>

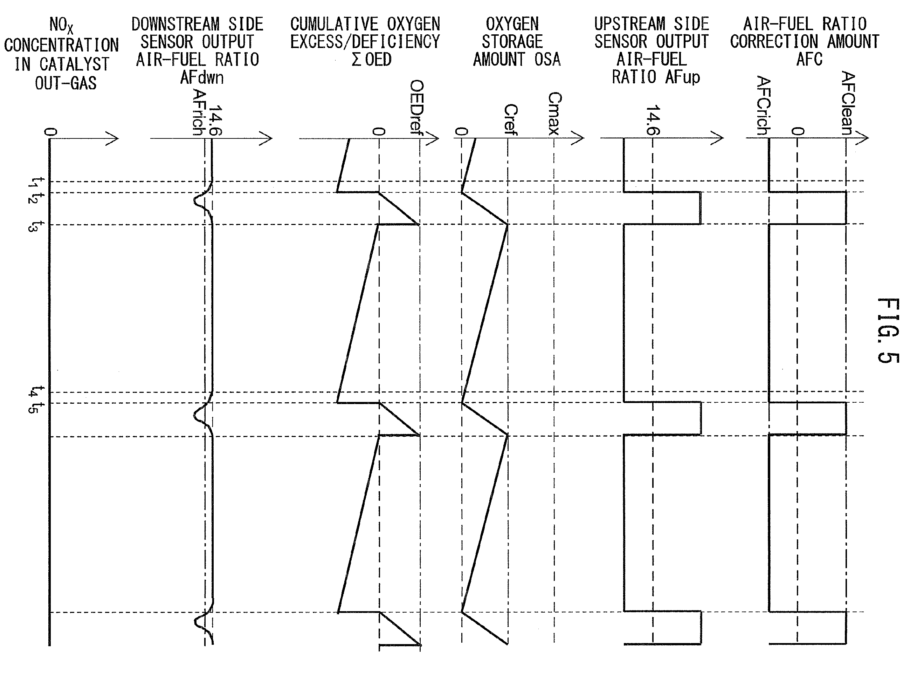

Referring to FIG. 5, the above-mentioned such operation will be explained in detail. FIG. 5 is a time chart of the air-fuel ratio correction amount AFC, output air-fuel ratio AFup of the upstream side air-fuel ratio sensor 40, oxygen storage amount OSA of the upstream side exhaust purification catalyst 20, cumulative oxygen excess/deficiency $\Sigma$OED, output air-fuel ratio AFdwn of the downstream side air-fuel ratio sensor 41, and concentration of $NO_x$ in the exhaust gas which flows out from the upstream side exhaust purification catalyst 20 (below, referred to simply as the "outflowing exhaust gas") when performing the basic air-fuel ratio control.

The cumulative oxygen excess/deficiency ΣOVED which is shown in FIG. 5 shows the cumulative value of the oxygen excess/deficiency OED which is calculated by the above formula (1). The cumulative oxygen excess/deficiency ΣOED is reset and made zero when the target air-fuel ratio is switched between the rich set air-fuel ratio TAFrich and the lean set air-fuel ratio TAFlean.

Note that the air-fuel ratio correction amount AFC is a correction amount relating to the target air-fuel ratio of the inflowing exhaust gas. When the air-fuel ratio correction amount AFC is 0, the target air-fuel ratio is set to an air-fuel ratio which is equal to the air-fuel ratio serving as the control center (below, referred to as the "control center air-fuel ratio") (in the present embodiment, the stoichiometric air-fuel ratio). When the air-fuel ratio correction amount AFC is a positive value, the target air-fuel ratio becomes an air-fuel ratio leaner than the control center air-fuel ratio (in the present embodiment, a lean air-fuel ratio), while when the air-fuel ratio correction amount AFC is a negative value, the target air-fuel ratio becomes an air-fuel ratio richer than the control center air-fuel ratio (in the present embodiment, a rich air-fuel ratio). Further, the "control center air-fuel ratio" means the air-fuel ratio to which the air-fuel ratio correction amount AFC is added in accordance with the engine operating state, that is, the air-fuel ratio which is the reference when changing the target air-fuel ratio in accordance with the air-fuel ratio correction amount AFC.

In the illustrated example, in the state before the time $t_1$, the air-fuel ratio correction amount AFC is made the rich set correction amount AFCrich (corresponding to the rich set air-fuel ratio). That is, the target air-fuel ratio is made the rich air-fuel ratio. Along with this, the output air-fuel ratio of the upstream side air-fuel ratio sensor 40 becomes a rich air-fuel ratio. The unburned gas contained in the inflowing exhaust gas is purified in the upstream side exhaust purification catalyst 20. Further, along with this, oxygen storage amount OSA of the upstream side exhaust purification catalyst 20 is gradually decreased. Accordingly, the cumulative oxygen excess/deficiency ΣOED is also gradually decreased. Further, the unburned gas is not contained in the outflowing exhaust gas due to the purification at the upstream side exhaust purification catalyst 20, so the output air-fuel ratio AFdwn of the downstream side air-fuel ratio sensor 41 becomes substantially the stoichiometric air-fuel ratio. At this time, the air-fuel ratio of the inflowing exhaust gas which becomes the rich air-fuel ratio, so the amount of $NO_x$ which is exhausted from the upstream side exhaust purification catalyst 20 becomes substantially zero.

If the upstream side exhaust purification catalyst 20 gradually decreases in stored amount of oxygen OSA, the stored amount of oxygen OSA approaches zero at the time $t_1$. Along with this, part of the unburned gas which flows into the upstream side exhaust purification catalyst 20 starts to flow out without being purified by the upstream side exhaust purification catalyst 20. Due to this, from the time $t_1$ on, the output air-fuel ratio AFdwn of the downstream side air-fuel ratio sensor 41 gradually falls. As a result, at the time $t_2$, the output air-fuel ratio AFdwn of the downstream side air-fuel ratio sensor 41 reaches the rich judgment air-fuel ratio AFrich.

In the present embodiment, when the output air-fuel ratio AFdwn of the downstream side air-fuel ratio sensor 41 becomes the rich judgment air-fuel ratio AFrich or less, to make the stored amount of oxygen OSA increase, the air-fuel ratio correction amount AFC is switched to the lean set correction amount AFClean (corresponding to the lean set air-fuel ratio). Therefore, the target air-fuel ratio is switched from the rich air-fuel ratio to the lean air-fuel ratio. Further, at this time, the cumulative oxygen excess/deficiency ΣOED is reset to 0.

Note that, in the present embodiment, the air-fuel ratio correction amount AFC is switched after the output air-fuel ratio AFdwn of the downstream side air-fuel ratio sensor 41 reaches the rich judgment air-fuel ratio AFrich. This is because even if the stored amount of oxygen of the upstream side exhaust purification catalyst 20 is sufficient, the air-fuel ratio of the outflowing exhaust gas sometimes ends up being slightly offset from the stoichiometric air-fuel ratio. Conversely speaking, the rich judgment air-fuel ratio is made an air-fuel ratio which the air-fuel ratio of the outflowing exhaust gas will never reach when the stored amount of oxygen of the upstream side exhaust purification catalyst 20 is sufficient.

At the time $t_2$, when the target air-fuel ratio is switched to the lean air-fuel ratio, the air-fuel ratio of the inflowing exhaust gas changes from the rich air-fuel ratio to the lean air-fuel ratio. Further, along with this, the output air-fuel ratio AFup of the upstream side air-fuel ratio sensor 40 becomes a lean air-fuel ratio (in actuality, a delay occurs from when the target air-fuel ratio is switched to when the air-fuel ratio of the inflowing exhaust gas changes, but in the illustrated example, it is deemed for convenience that the change is simultaneous). If at the time $t_2$ the air-fuel ratio of the inflowing exhaust gas changes to the lean air-fuel ratio, the upstream side exhaust purification catalyst 20 increases in the stored amount of oxygen OSA. Further, along with this, the cumulative oxygen excess/deficiency ΣOED also gradually increases.

Due to this, the air-fuel ratio of the outflowing exhaust gas changes to the stoichiometric air-fuel ratio, and the output air-fuel ratio AFdwn of the downstream side air-fuel ratio sensor 41 converges to the stoichiometric air-fuel ratio. At this time, the air-fuel ratio of the inflowing exhaust gas becomes the lean air-fuel ratio, but there is sufficient leeway in the oxygen storage ability of the upstream side exhaust purification catalyst 20, so the oxygen in the inflowing exhaust gas is stored in the upstream side exhaust purification catalyst 20 and the $NO_x$ is removed by reduction. For this reason, the exhaust of $NO_x$ from the upstream side exhaust purification catalyst 20 becomes substantially zero.

After this, if the upstream side exhaust purification catalyst 20 increases in stored amount of oxygen OSA, at the time $t_3$, the stored amount of oxygen OSA of the upstream side exhaust purification catalyst 20 reaches the switching reference storage amount Cref. For this reason, the cumulative oxygen excess/deficiency $\Sigma$OED reaches the switching reference value OEDref which corresponds to the switching reference storage amount Cref. In the present embodiment, if the cumulative oxygen excess/deficiency $\Sigma$OED becomes the switching reference value OEDref or more, the storage of oxygen in the upstream side exhaust purification catalyst 20 is suspended by switching the air-fuel ratio correction amount AFC to the rich set correction amount AFCrich. Therefore, the target air-fuel ratio is made the rich air-fuel ratio. Further, at this time, the cumulative oxygen excess/deficiency $\Sigma$OED is reset to 0.

Here, in the example which is shown in FIG. 5, at the time $t_3$, the target air-fuel ratio is switched and simultaneously the oxygen storage amount OSA falls, but in actuality, a delay occurs from when switching the target air-fuel ratio to when the oxygen storage amount OSA falls. Further, when acceleration of the vehicle mounting the internal combustion engine causes the engine load to become higher and the intake air amount to greatly deviate for an instant etc., the air-fuel ratio of the inflowing exhaust gas sometimes unintentionally greatly deviates from the target air-fuel ratio for an instant.

As opposed to this, the switching reference storage amount Cref is set sufficiently lower than the maximum storable oxygen amount Cmax when the upstream side exhaust purification catalyst 20 is new. For this reason, even if the above mentioned delay occurs or the air-fuel ratio of the actual inflowing exhaust gas unintentional greatly deviates from the target air-fuel ratio for an instant, the stored amount of oxygen OSA does not reach the maximum storable oxygen amount Cmax. Conversely, the switching reference storage amount Cref is made an amount sufficiently small so that the stored amount of oxygen OSA does not reach the maximum storable oxygen amount Cmax even if the above mentioned delay or unintentionally deviation of air-fuel ratio occurs. For example, the switching reference storage amount Cref is made 3/4 or less of the maximum storable oxygen amount Cmax when the upstream side exhaust purification catalyst 20 is new, preferably 1/2 or less, more preferably 1/5 or less.

At the time $t_3$, if the target air-fuel ratio is switched to the rich air-fuel ratio, the air-fuel ratio of the inflowing exhaust gas changes from the lean air-fuel ratio to the rich air-fuel ratio. Along with this, the output air-fuel ratio AFup of the upstream side air-fuel ratio sensor 40 becomes a rich air-fuel ratio (in actuality, a delay occurs from when the target air-fuel ratio is switched to when the inflowing exhaust gas changes in air-fuel ratio, but in the illustrated example, it is deemed for convenience that the change is simultaneous). The inflowing exhaust gas contains unburned gas, so the upstream side exhaust purification catalyst 20 gradually decreases in stored amount of oxygen OSA. At the time $t_4$, in the same way as the time $t_1$, the output air-fuel ratio AFdwn of the downstream side air-fuel ratio sensor 41 starts to fall. At this time as well, the air-fuel ratio of the inflowing exhaust gas is the rich air-fuel ratio, so $NO_x$ exhausted from the upstream side exhaust purification catalyst 20 becomes substantially zero.

Next, at the time $t_5$, in the same way as time $t_2$, the output air-fuel ratio AFdwn of the downstream side air-fuel ratio sensor 41 reaches the rich judgment air-fuel ratio AFrich. Due to this, the air-fuel ratio correction amount AFC is switched to the value AFClean which corresponds to the lean set air-fuel ratio. After this, the cycle of the above mentioned times $t_1$ to $t_5$ is repeated.

Further, in the present embodiment, while the above-mentioned cycle of the times $t_1$ to $t_5$ is repeated, the amount of fuel which is fed to the combustion chamber 5 is controlled by feedback so that the output air-fuel ratio AFup of the upstream side air-fuel ratio sensor 40 becomes the target air-fuel ratio. For example, when the output air-fuel ratio AFup of the upstream side air-fuel ratio sensor 40 is lower (richer) than the target air-fuel ratio, the amount of fuel which is fed to the combustion chamber 5 is made smaller. On the other hand, when the output air-fuel ratio AFup of the upstream side air-fuel ratio sensor 40 is higher (leaner) than the value corresponding to the target air-fuel ratio, the amount of fuel which is fed to the combustion chamber 5 becomes greater.

As will be understood from the above explanation, according to the present embodiment, it is possible to constantly suppress the amount of discharge of $NO_x$ from the upstream side exhaust purification catalyst 20. That is, so long as performing the above-mentioned control, basically, the amount of discharge of $NO_x$ from the upstream side exhaust purification catalyst 20 can be made substantially zero. Further, the cumulative time when calculating the cumulative oxygen excess/deficiency $\Sigma$OED is short, so there is less of a chance of calculation error compared with when calculating the cumulative amount over a long period of time. For this reason, error in calculation of the cumulative oxygen excess/deficiency $\Sigma$OED can be kept from causing $NO_x$ to end up being discharged.

Further, in general, if the stored amount of oxygen of the exhaust purification catalyst is maintained constant, the exhaust purification catalyst falls in oxygen storage ability. That is, to maintain the exhaust purification catalyst high in oxygen storage ability, the stored amount of oxygen of the exhaust purification catalyst has to fluctuate. As opposed to this, according to the present embodiment, as shown in FIG. 5, the stored amount of oxygen OSA of the upstream side exhaust purification catalyst 20 constantly fluctuates up and down, so the oxygen storage ability is kept from falling.

Note that, in the above embodiment, at the times $t_2$ to $t_3$, the air-fuel ratio correction amount AFC is maintained at the lean set correction amount AFClean. However, at this time period, the air-fuel ratio correction amount AFC does not necessarily have to be maintained constant. It may be set to gradually decrease or otherwise fluctuate. Alternatively, in the time period of the times $t_2$ to $t_3$, it is also possible to temporarily make the air-fuel ratio correction amount AFC a value smaller than 0 (for example, the rich set correction amount etc). That is, in the time period of the times $t_2$ to $t_3$, the target air-fuel ratio may also temporarily be made the rich air-fuel ratio.

Similarly, in the above embodiment, at the times $t_3$ to $t_5$, the air-fuel ratio correction amount AFC is maintained at the rich set correction amount AFCrich. However, at this time period, the air-fuel ratio correction amount AFC does not necessarily have to be maintained constant. It may be set to gradually increase or otherwise fluctuate. Alternatively, in the time period of the times $t_3$ to $t_5$, it is also possible to temporarily make the air-fuel ratio correction amount AFC a value larger than 0 (for example, the lean set correction amount etc.). That is, in the time period of the times $t_3$ to $t_5$, the target air-fuel ratio may also temporarily be made the lean air-fuel ratio.

However, in this case as well, the air-fuel ratio correction amount AFC at the times $t_2$ to $t_3$ is set so that the difference between the average value of the target air-fuel ratio and the stoichiometric air-fuel ratio at the times $t_2$ to $t_3$ becomes larger than the difference between the average value of the target air-fuel ratio and the stoichiometric air-fuel ratio at the times $t_3$ to $t_5$.

Further, in the above embodiment, the cumulative oxygen excess/deficiency $\Sigma$OVED is calculated based on the output air-fuel ratio AFup etc. However, the stored amount of oxygen OSA may also be calculated based on other parameters in addition to these parameters and may be estimated based on parameters which are different from these parameters. Further, in the above embodiment, if the cumulative oxygen excess/deficiency $\Sigma$OED becomes the switching reference value OEDref or more, the target air-fuel ratio is switched from the lean set air-fuel ratio to the rich set air-fuel ratio. However, the timing of switching the target air-fuel ratio from the lean set air-fuel ratio to the rich set air-fuel ratio may, for example, also be based on the engine operating time or the cumulative amount of intake air from when switching the target air-fuel ratio from the rich set air-fuel ratio to the lean set air-fuel ratio or other parameter. However, in this case as well, the target air-fuel ratio has to be switched from the lean set air-fuel ratio to the rich set air-fuel ratio while the stored amount of oxygen OSA of the upstream side exhaust purification catalyst 20 is estimated to be smaller than the maximum storable oxygen amount.

<Deviation at Upstream Side Air Fuel Ratio Sensor> In this regard, when the engine body 1 has a plurality of cylinders, sometimes a deviation occurs between the cylinders in the air-fuel ratio of the exhaust gas which is exhausted from the cylinders. On the other hand, the upstream side air-fuel ratio sensor 40 is arranged at the header of the exhaust manifold 19, but depending on the position of arrangement, the extent by which the exhaust gas which is exhausted from each cylinder is exposed to the upstream side air-fuel ratio sensor 40 differs between cylinders. As a result, the output air-fuel ratio of the upstream side air-fuel ratio sensor 40 is strongly affected by the air-fuel ratio of the exhaust gas which is exhausted from a certain specific cylinder. Therefore, when the air-fuel ratio of the exhaust gas which is exhausted from a certain specific cylinder becomes an air-fuel ratio which differs from the average air-fuel ratio of the exhaust gas which is exhausted from all cylinders, deviation occurs between the average air-fuel ratio and the output air-fuel ratio of the upstream side air-fuel ratio sensor 40. That is, the output air-fuel ratio of the upstream side air-fuel ratio sensor 40 deviates to the rich side or lean side from the average air-fuel ratio of the actual exhaust gas.

Further, the air-fuel ratio sensor gradually deteriorates along with use and sometimes changes in gain characteristic. For example, if the gain characteristic of the upstream side air-fuel ratio sensor 40 changes, sometimes deviation occurs between the output air-fuel ratio of the upstream side air-fuel ratio sensor 40 and the actual air-fuel ratio of the exhaust gas. In this case, the output air-fuel ratio of the upstream side air-fuel ratio sensor 40 deviates to the rich side or lean side from the actual air-fuel ratio of the exhaust gas.

Further, in unburned gas, hydrogen is fast in speed of passage through the diffusion regulating layer of the air-fuel ratio sensor. For this reason, if the concentration of hydrogen in the exhaust gas is high, the output air-fuel ratio of the upstream side air-fuel ratio sensor 40 ends up deviating to the lower side from the actual air-fuel ratio of the exhaust gas (that is, the rich side).

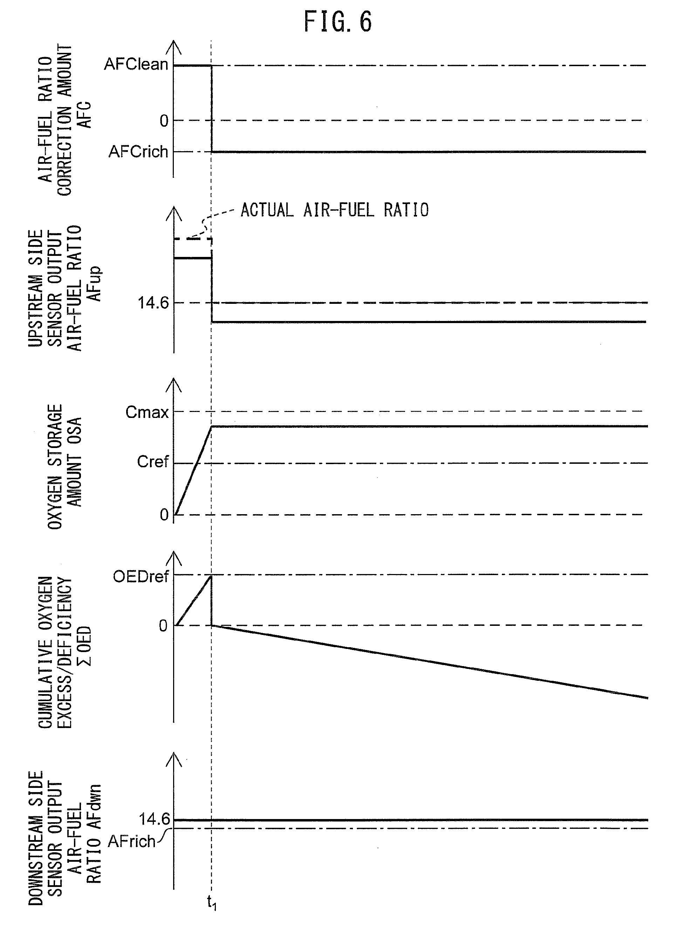

If the output air-fuel ratio of the upstream side air-fuel ratio sensor 40 greatly deviates, even if the target air-fuel ratio is set to the rich set air-fuel ratio, the air-fuel ratio of the actual exhaust gas sometimes ends up becoming the stoichiometric air-fuel ratio. This situation is shown in FIG. 6. FIG. 6 is a time chart of the air-fuel ratio correction amount etc. when a large deviation occurs in the output value of the upstream side air-fuel ratio sensor. In the figure, the solid line in the output air-fuel ratio AFup of the upstream side air-fuel ratio sensor 40 shows the air-fuel ratio corresponding to the output detected by the upstream side air-fuel ratio sensor 40. Further, the broken line in the output air-fuel ratio AFup of the upstream side air-fuel ratio sensor 40 shows the actual air-fuel ratio of the exhaust gas circulating around the upstream side air-fuel ratio sensor 40, that is, the actual air-fuel ratio of the inflowing exhaust gas.

In FIG. 6, before the time $t_1$, the air-fuel ratio correction amount AFC is made the lean set correction amount AFClean. Along with this, the output air-fuel ratio AFup of the upstream side air-fuel ratio sensor 40 becomes the lean set air-fuel ratio. However, the output air-fuel ratio of the upstream side air-fuel ratio sensor 40 greatly deviates to the rich side, so the actual air-fuel ratio of the inflowing exhaust gas (broken line in the figure) becomes an air-fuel ratio leaner than the lean set air-fuel ratio.

After that, if at the time $t_1$ the cumulative oxygen excess/deficiency $\Sigma$OED calculated based on the output air-fuel ratio AFup of the upstream side air-fuel ratio sensor 40 reaches the switching reference value OEDref, the air-fuel ratio correction amount AFC is switched to the rich set correction amount AFCrich. Along with this, the output air-fuel ratio AFup of the upstream side air-fuel ratio sensor 40 becomes the rich set air-fuel ratio. However, the output air-fuel ratio of the upstream side air-fuel ratio sensor 40 greatly deviates to the rich side, so the actual air-fuel ratio of the inflowing exhaust gas (broken line in figure) becomes the stoichiometric air-fuel ratio.

As a result, the oxygen storage amount OSA of the upstream side exhaust purification catalyst 20 is not changed but is maintained at a constant value. For this reason, even after a long time has elapsed from when the air-fuel ratio correction amount AFC is switched to the rich set correction amount AFCrich, unburned gas is not discharged from the upstream side exhaust purification catalyst 20. Therefore, the output air-fuel ratio AFdwn of the downstream side air-fuel ratio sensor 41 is maintained at substantially the stoichiometric air-fuel ratio as is. As explained above, the air-fuel ratio correction amount AFC is switched from the rich set correction amount AFCrich to the lean set correction amount AFClean when the output air-fuel ratio AFdwn of the downstream side air-fuel ratio sensor 41 reaches the rich judged air-fuel ratio AFrich. However, in the example shown in FIG. 6, the output air-fuel ratio AFdwn of the downstream side air-fuel ratio sensor 41 is maintained at the stoichiometric air-fuel ratio as is, so the air-fuel ratio correction amount AFC is maintained at the rich set correction amount AFCrich over a long period of time. Therefore, if the output air-fuel ratio of the upstream side air-fuel ratio sensor 40 has greatly deviated, the air-fuel ratio correction amount AFC is not switched.

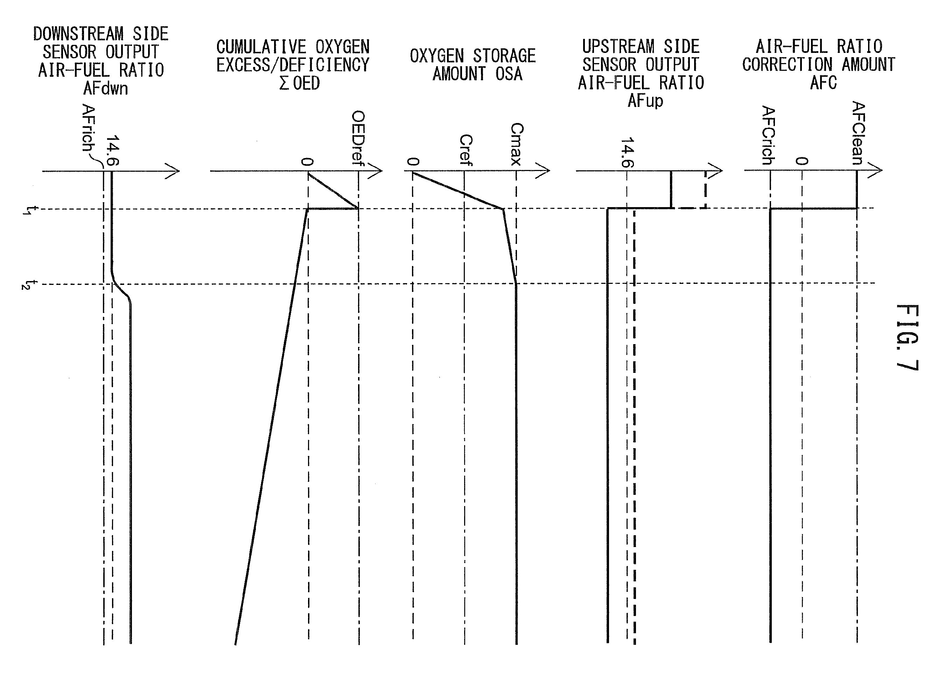

FIG. 7 is a view, similar to FIG. 6, showing the case where the output air-fuel ratio of the upstream side air-fuel ratio sensor 40 has extremely greatly deviated to the rich side. In the example shown in FIG. 7, in the same way as the example which is shown in FIG. 6, at the time $t_1$, the air-fuel ratio correction amount AFC is switched to the rich set correction amount AFCrich. That is, at the time $t_1$, the target air-fuel ratio is set to the rich set air-fuel ratio. However, due to the deviation of the output air-fuel ratio of the upstream side air-fuel ratio sensor 40, the actual air-fuel ratio of the inflowing exhaust gas (broken line in figure) becomes the lean air-fuel ratio.

As a result, regardless of the fact that the air-fuel ratio correction amount AFC is set to the rich set correction amount AFCrich, lean air-fuel ratio exhaust gas flows into the upstream side exhaust purification catalyst 20. For this reason, the oxygen storage amount OSA of the upstream side exhaust purification catalyst 20 gradually increases and at the time $t_2$ finally reaches the maximum storable oxygen amount Cmax. If, in this way, the oxygen storage amount OSA reaches the maximum storable oxygen amount Cmax, the upstream side exhaust purification catalyst 20 will no longer be able to store any more of the oxygen in the exhaust gas. For this reason, the oxygen and $NO_x$ which were contained in the inflowing exhaust gas flow out from the upstream side exhaust purification catalyst 20 as they are and as a result the output air-fuel ratio AFdwn of the downstream side air-fuel ratio sensor 41 rises. However, the air-fuel ratio correction amount AFC is switched from the rich set correction amount AFCrich to the lean set correction amount AFClean when the output air-fuel ratio AFdwn of the downstream side air-fuel ratio sensor 41 reaches the rich judged air-fuel ratio AFrich. For this reason, even when the output air-fuel ratio of the upstream side air-fuel ratio sensor 40 deviates extremely greatly, the air-fuel ratio correction amount AFC is not switched.

<Stuck Learning Control>

Therefore, the internal combustion engine of the present embodiment comprises a learning means for correcting a parameter relating to feedback control so that the deviation between the target air-fuel ratio of the inflowing exhaust gas and the actual air-fuel ratio of the inflowing exhaust gas in feedback control based on the output air-fuel ratio of the upstream side air-fuel ratio sensor 40 becomes smaller. Even if the deviation of the output air-fuel ratio of the upstream side air-fuel ratio sensor 40 is large, the learning means performs stoichiometric air-fuel ratio stuck learning control, lean stuck learning control, and rich stuck learning control to compensate for that deviation, based on the air-fuel ratio detected by the downstream side air-fuel ratio sensor 41.

<Stoichiometric Air-Fuel Ratio Stuck Learning> First, the stoichiometric air-fuel ratio stuck learning control will be explained. The stoichiometric air-fuel ratio stuck learning control is learning control which is performed when the air-fuel ratio detected by the downstream side air-fuel ratio sensor 41 is stuck at the stoichiometric air-fuel ratio as shown in the example shown in FIG. 6.

In this regard, the region between the rich judged air-fuel ratio AFrich and the lean judged air-fuel ratio AFlean will be referred to as the "the intermediate region M". This intermediate region M corresponds to the stoichiometric air-fuel ratio proximity region between the rich judged air-fuel ratio and the lean judged air-fuel ratio. In stoichiometric air-fuel ratio-stuck learning control, after the air-fuel ratio correction amount AFC is switched to the rich set correction amount AFCrich, that is, after the target air-fuel ratio is switched to the rich set air-fuel ratio, it is judged whether the output air-fuel ratio AFdwn of the downstream side air-fuel ratio sensor 41 has been maintained in the intermediate region M at least for a predetermined stoichiometric air-fuel ratio maintenance judgement time. Further, if the output air-fuel ratio AFdwn of the downstream side air-fuel ratio sensor 41 has been maintained in the intermediate region M for the stoichiometric air-fuel ratio maintenance judgement time or more, the learning value sfbg is reduced so that the actual air-fuel ratio of the inflowing exhaust gas changes to the rich side. A learning value sfbg is a value changing in accordance with the deviation of the output air-fuel ratio (output current) of the upstream side air-fuel ratio sensor 40 and, in the present embodiment, is used for correction of the control center air-fuel ratio AFR.

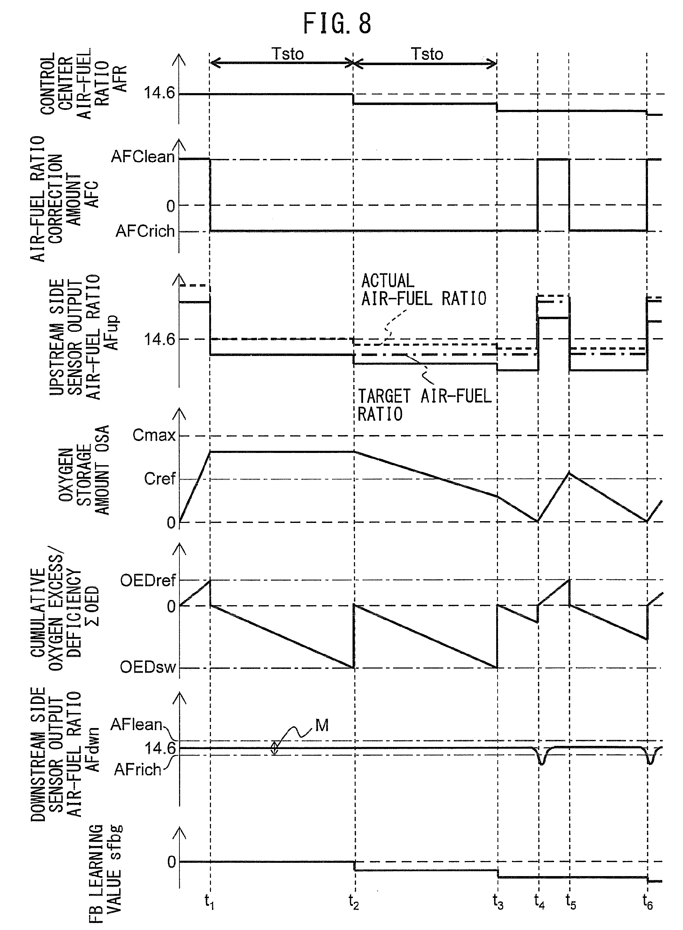

Referring to FIG. 8, the above-mentioned such control will be specifically explained. FIG. 8 is a time chart of the control center air-fuel ratio AFR, the air-fuel ratio correction amount AFC, the output air-fuel ratio AFup of the upstream side air-fuel ratio sensor 40, the oxygen storage amount OSA of the upstream side exhaust purification catalyst 20, the cumulative oxygen excess/deficiency ∑OED, the output air-fuel ratio AFdwn of the downstream side air-fuel ratio sensor 41, and the learning value sfbg when performing stoichiometric air-fuel ratio stuck learning. FIG. 8, like FIG. 6, shows the case when the output air-fuel ratio AFup of the upstream side air-fuel ratio sensor 40 greatly deviates to the low side (the rich side). Note that, in the figure, the solid line in the output air-fuel ratio AFup of the upstream side air-fuel ratio sensor 40 shows the air-fuel ratio corresponding to the output detected by the upstream side air-fuel ratio sensor 40. Further, the broken line in the output air-fuel ratio AFup of the upstream side air-fuel ratio sensor 40 shows the actual air-fuel ratio of the exhaust gas circulating around the upstream side air-fuel ratio sensor 40, that is, the actual air-fuel ratio of the inflowing exhaust gas. In addition, the one-dot chain line in the output air-fuel ratio AFup of the upstream side air-fuel ratio sensor 40 shows the target air-fuel ratio, that is, the air-fuel ratio corresponding to the air-fuel ratio correction amount AFC.

In the example shown in the figure, similarly to FIG. 6, before the time $t_1$, the air-fuel ratio correction amount AFC is set to the lean set correction amount AFClean. Then, at the time t1, the cumulative oxygen excess/deficiency ∑OED reaches the switching reference value OEDref, and the air-fuel ratio correction amount AFC is switched to the rich set correction amount AFCrich. However, since the output air-fuel ratio of the upstream side air-fuel ratio sensor 40 greatly deviates to the rich side, similarly to the example shown in FIG. 6, the actual air-fuel ratio of the inflowing exhaust gas is substantially the stoichiometric air-fuel ratio. Therefore, after the time $t_1$, the oxygen storage amount OSA of the upstream side exhaust purification catalyst 20 is maintained at a constant value. As a result, the output air-fuel ratio AFdwn of the downstream side air-fuel ratio sensor 41 is maintained in the stoichiometric air-fuel ratio proximity, that is, intermediate region M, for a long time period.

Therefore, in the present embodiment, if the output air-fuel ratio AFdwn of the downstream side air-fuel ratio sensor 41 is maintained in the intermediate region M for the predetermined stoichiometric air-fuel ratio maintenance judgement time Tsto or more after the air-fuel ratio correction amount AFC is switched to the rich set correction amount AFCrich, the control center air-fuel ratio AFR is corrected. In particular, in the present embodiment, the learning value sfbg is updated so that the actual air-fuel ratio of the inflowing exhaust gas changes to the rich side.

Specifically, in the present embodiment, the learning value sfbg is calculated by the following formula (2), and the control center air-fuel ratio AFR is corrected by the following formula (3).

$$\mathrm{sfbg(n)=sfbg(n-1)+k_1 \cdot AFCrich \ \ldots(2)}$$

$$\mathrm{AFR=AFRbase+sfbg(n) \ \ldots(3)}$$

Note that in the above formula (2), $k_1$ is the gain which shows the extent of correction of the control center air-fuel ratio AFR ($0<k_1 \leq 1$). The larger the value of the gain $k_1$, the larger the correction amount of the control center air-fuel ratio AFR becomes. Further, in the above formula (3), the base control center air-fuel ratio AFRbase is a control center air-fuel ratio which is used as base, and is the stoichiometric air-fuel ratio in the present embodiment.

In this regard, as explained above, if the output air-fuel ratio AFdwn of the downstream side air-fuel ratio sensor 41 is maintained in the intermediate region M for a long period of time after the air-fuel ratio correction amount AFC is switched, the actual air-fuel ratio of the inflowing exhaust gas is a value close to substantially the stoichiometric air-fuel ratio. Therefore, the deviation at the upstream side air-fuel ratio sensor 40 is the same extent as the difference between the control center air-fuel ratio (stoichiometric air-fuel ratio) and the target air-fuel ratio (in this case, the rich set air-fuel ratio). In the present embodiment, as shown in the above formula (2), the learning value sfbg is updated based on the air-fuel ratio correction amount AFC corresponding to the difference between the control center air-fuel ratio and the target air-fuel ratio. Due to this, it is possible to more suitably compensate for deviation in the output air-fuel ratio of the upstream side air-fuel ratio sensor 40.

In the example shown in FIG. 8, until the time $t_2$ at which the stoichiometric air-fuel ratio maintenance judgement time Tsto elapses from the time $t_1$, the air-fuel ratio correction amount AFC is set to the rich set correction amount AFCrich. Therefore, if formula (2) is used, at the time $t_2$, the learning value sfbg is decreased. As a result, the actual air-fuel ratio of the inflowing exhaust gas changes to the rich side. Due to this, after the time $t_2$, the deviation of the actual air-fuel ratio of the inflowing exhaust gas from the target air-fuel ratio becomes smaller compared with before the time $t_2$. Therefore, after the time $t_2$, the difference between the broken line which shows the actual air-fuel ratio and the one-dot chain line which shows the target air-fuel ratio becomes smaller than the difference before the time $t_2$.

In the example shown in FIG. 8, the gain $k_1$ is set to a relatively small value. Therefore, even if the learning value sfbg is updated at the time $t_2$, deviation of the actual air-fuel ratio of the inflowing exhaust gas, from the target air-fuel ratio, remains. Therefore, the actual air-fuel ratio of the exhaust gas becomes an air-fuel ratio which is leaner than the rich set air-fuel ratio, that is, an air-fuel ratio with a small rich degree (see broken line of FIG. 8). For this reason, the decreasing speed of the oxygen storage amount OSA of the upstream side exhaust purification catalyst 20 is slow.

As a result, from the time $t_2$ to the time $t_3$ at which the stoichiometric air-fuel ratio maintenance judgement time Tsto elapses, the output air-fuel ratio AFdwn of the downstream side air-fuel ratio sensor 41 is maintained in the stoichiometric air-fuel ratio proximity, i.e., intermediate region M. Therefore, in the example shown in FIG. 8, even at the time $t_3$, the learning value sfbg is updated by using formula (2).

Then, in the example shown in FIG. 8, at the time $t_4$, the output air-fuel ratio AFdwn of the downstream side air-fuel ratio sensor 41 becomes the rich judged air-fuel ratio AFrich or less. After the output air-fuel ratio AFdwn becomes the rich judged air-fuel ratio AFrich or less in this way, as explained above, the air-fuel ratio correction amount AFC is alternately set to the lean set correction amount AFClean and the rich set correction amount AFCrich.

By updating the learning value sfbg by the stoichiometric air-fuel ratio stuck learning control in this way, it is possible to compensate the deviation at the output air-fuel ratio of the upstream side air-fuel ratio sensor 40 even if the deviation of the output air-fuel ratio AFup of the upstream side air-fuel ratio sensor 40 is large. As a result, even if the deviation of the output air-fuel ratio AFup of the upstream side air-fuel ratio sensor 40 is large, the target air-fuel ratio can be switched.

Note that in the above embodiment, the stoichiometric air-fuel ratio maintenance judgement time Tsto is a predetermined time. In this case, the stoichiometric air-fuel ratio maintenance judgement time is set to equal to or greater than the time usually taken from when switching the target air-fuel ratio to the rich air-fuel ratio to when the absolute value of the cumulative oxygen excess/deficiency $\Sigma$OED reaches the maximum storable oxygen amount of the unused upstream side exhaust purification catalyst 20. Specifically, it is preferably set to two to four times of that time.

Alternatively, the stoichiometric air-fuel ratio maintenance judgment time Tsto may be made to change in accordance with the cumulative oxygen excess/deficiency $\Sigma$OED from when switching the target air-fuel ratio to the rich air-fuel ratio or other parameter. Specifically, for example, the larger the cumulative oxygen excess/deficiency $\Sigma$OED, the shorter the stoichiometric air-fuel ratio maintenance judgment time Tsto is made. Due to this, it is also possible to update the learning value sfbg in the above way when the cumulative oxygen excess/deficiency $\Sigma$OED from when switching the target air-fuel ratio to the rich air-fuel ratio becomes a predetermined amount (for example, OEDsw of FIG. 8). Further, in this case, it is necessary to make the above predetermined amount in the cumulative oxygen excess/deficiency $\Sigma$OED a maximum storable oxygen amount of the upstream side exhaust purification catalyst 20 in the new state or more. Specifically, it is preferable to make it an amount of two times to four times or so of the maximum storable oxygen amount.

Note that, the stoichiometric air-fuel ratio stuck learning control can also be applied to other air-fuel ratio control different from the above-mentioned basic air-fuel ratio control. The "other air-fuel ratio control" is, for example, control in which the target air-fuel ratio is switched to the rich air-fuel ratio when the output air-fuel ratio of the downstream side air-fuel ratio sensor 41 becomes the lean judged air-fuel ratio or more, and the target air-fuel ratio is switched to the lean air-fuel ratio when the output air-fuel ratio of the downstream side air-fuel ratio sensor 41 becomes the rich judged air-fuel ratio or less. In this case, if the air-fuel ratio detected by the downstream side air-fuel ratio sensor 41 is maintained in the stoichiometric air-fuel ratio proximal air-fuel ratio region for the stoichiometric air-fuel ratio maintenance judgment time Tsto or more from when the target air-fuel ratio is switched to the lean air-fuel ratio, the learning value sfbg is made to increase so that the actual air-fuel ratio of the inflowing exhaust gas changes to the lean side. Further, if the air-fuel ratio detected by the downstream side air-fuel ratio sensor 41 is maintained in the stoichiometric air-fuel ratio proximal air-fuel ratio region for the stoichiometric air-fuel ratio maintenance judgment time Tsto or more from when the target air-fuel ratio is switched to the rich air-fuel ratio, the learning value sfbg is made to decrease so that the actual air-fuel ratio of the inflowing exhaust gas changes to the rich side.

Further, in the above embodiment, the control center air-fuel ratio AFR is corrected based on the learning value sfbg. However, another parameter relating to feedback control based on the output air-fuel ratio of the upstream side air-fuel ratio sensor 40 may be corrected based on the learning value sfbg. As the other parameter, for example, the amount of feed of fuel to the combustion chamber 5, the output air-fuel ratio of the upstream side air-fuel ratio sensor 40, the air-fuel ratio correction amount AFC, etc. may be mentioned.

Therefore, if expressing these together, in the present embodiment, when the target air-fuel ratio is set to a first side of one of the rich side and lean side from the stoichiometric air-fuel ratio by the air-fuel ratio control means, if it is judged that the air-fuel ratio of the outflowing exhaust gas is maintained at the stoichiometric air-fuel ratio for a predetermined air-fuel ratio maintenance judgment time or more, the learning means corrects a parameter relating to feedback control based on the output air-fuel ratio of the upstream side air-fuel ratio sensor 40 so that the actual air-fuel ratio of the inflowing exhaust gas changes to the first side as "stoichiometric air-fuel ratio stuck learning".

<Rich/Lean Stuck Learning>

Next, lean stuck learning control will be explained. The lean stuck learning control is learning control which is performed where, as shown in the example of FIG. 7, although the target air-fuel ratio is set to the rich air-fuel ratio, the air-fuel ratio detected by the downstream side air-fuel ratio sensor 41 is stuck at the lean air-fuel ratio. In lean stuck learning control, it is judged whether the output air-fuel ratio AFdwn of the downstream side air-fuel ratio sensor 41 is maintained at the lean air-fuel ratio for a predetermined lean air-fuel ratio maintenance judgement time or more after the air-fuel ratio correction amount AFC is switched to the rich set correction amount AFCrich, that is, after the target air-fuel ratio is switched to the rich set air-fuel ratio. Further, when it is maintained at the lean air-fuel ratio for at least the lean air-fuel ratio maintenance judgement time, the learning value sfbg is decreased so that the actual air-fuel ratio of the inflowing exhaust gas changes to the rich side.

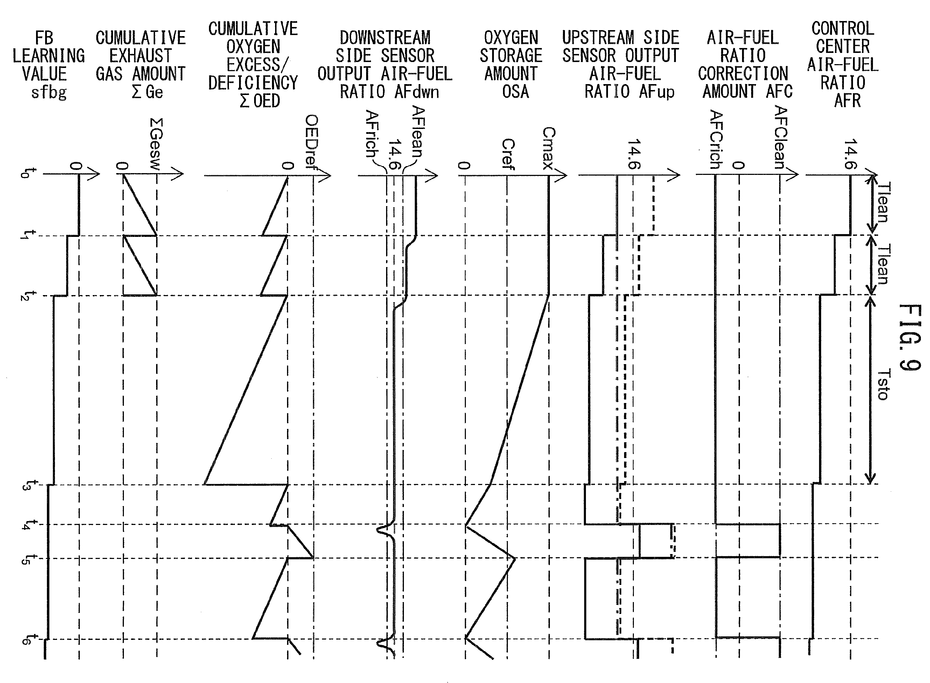

Referring to FIG. 9, the control explained above will be specifically explained. FIG. 9 is a time chart of the control center air-fuel ratio AFR, the air-fuel ratio correction amount AFC, the output air-fuel ratio AFup of the upstream side air-fuel ratio sensor 40, the oxygen storage amount OSA of the upstream side exhaust purification catalyst 20, the cumulative oxygen excess/deficiency $\Sigma$OED, the output air-fuel ratio AFdwn of the downstream side air-fuel ratio sensor 41, and the learning value sfbg when performing lean stuck learning etc. FIG. 9, like FIG. 7, shows the case where the output air-fuel ratio AFup of the upstream side air-fuel ratio sensor 40 greatly deviates to the low side (the rich side). Note that, in the figure, the solid line in the output air-fuel ratio AFup of the upstream side air-fuel ratio sensor 40 shows the air-fuel ratio corresponding to the output detected by the upstream side air-fuel ratio sensor 40. Further, the broken line in the output air-fuel ratio AFup of the upstream side air-fuel ratio sensor 40 shows the actual air-fuel ratio of the exhaust gas circulating around the upstream side air-fuel ratio sensor 40, that is, the actual air-fuel ratio of the inflowing exhaust gas. In addition, the one-dot chain line in the output air-fuel ratio AFup of the upstream side air-fuel ratio sensor 40 shows the target air-fuel ratio, that is, the air-fuel ratio corresponding to the air-fuel ratio correction amount AFC.

In the example shown in the figure, at the time $t_0$, the air-fuel ratio correction amount AFC is switched from the lean set correction amount AFClean to the rich set correction amount AFCrich. However, since the output air-fuel ratio of the upstream side air-fuel ratio sensor 40 deviates extremely greatly to the rich side, similarly to the example shown in FIG. 7, the actual air-fuel ratio of the inflowing exhaust gas becomes the lean air-fuel ratio. Therefore, after the time $t_0$, the output air-fuel ratio AFdwn of the downstream side air-fuel ratio sensor 41 is maintained at the lean air-fuel ratio.

Therefore, in the present embodiment, when the output air-fuel ratio AFdwn of the downstream side air-fuel ratio sensor 41 is maintained at the lean air-fuel ratio for the predetermined lean air-fuel ratio maintenance judgement time Tlean or more after the air-fuel ratio correction amount AFC is set to the rich set correction amount AFCrich, the control center air-fuel ratio AFR is corrected. In particular, in the present embodiment, the learning value sfbg is corrected so that the actual air-fuel ratio of the inflowing exhaust gas changes to the rich side.

Specifically, in the present embodiment, the learning value sfbg is calculated by using the following formula (4) and the control center air-fuel ratio AFR is corrected based on the learning value sfbg by using the above formula (3).

$$\mathtt{sfbg(n)=sfbg(n-1)+k_2\times(AFCrich-(AFdwn-14.6))\ \ldots(4)}$$

Note that in the above formula (4), $k_2$ is the gain which expresses the extent of correction of the control center air-fuel ratio AFR ($0 < k_2 \leq 1$). The larger the value of the gain $k_2$, the larger the correction amount of the control center air-fuel ratio AFR.

In this regard, in the example shown in FIG. 9, when the air-fuel ratio correction amount AFC is set at the rich set correction amount AFCrich, the output air-fuel ratio AFdwn of the downstream side air-fuel ratio sensor 41 is maintained at the lean air-fuel ratio. In this case, the deviation in the upstream side air-fuel ratio sensor 40 corresponds to the difference between the target air-fuel ratio and the output air-fuel ratio of the downstream side air-fuel ratio sensor 41. If breaking this down, the deviation in the upstream side air-fuel ratio sensor 40 can be said to be of the same extent as a value acquired by adding the difference between the target air-fuel ratio and the stoichiometric air-fuel ratio (corresponding to the rich set correction amount AFCrich) to the difference between the stoichiometric air-fuel ratio and the output air-fuel ratio of the downstream side air-fuel ratio sensor 41. Therefore, in the present embodiment, as shown in the above formula (4), the learning value sfbg is updated based on the value acquired by adding the rich set correction amount AFCrich to the difference between the output air-fuel ratio of the downstream side air-fuel ratio sensor 41 and the stoichiometric air-fuel ratio. In particular, in the above-mentioned stoichiometric air-fuel ratio stuck learning, the learning value is corrected by an amount corresponding to the rich set correction amount AFCrich, while in lean stuck learning, the learning value is corrected by this amount plus a value corresponding to the output air-fuel ratio AFdwn of the downstream side air-fuel ratio sensor 41. Further, the gain $k_2$ is set to a similar extent to the gain $k_1$. Therefore, the correction amount in the lean stuck learning is larger than the correction amount in stoichiometric air-fuel ratio stuck learning. Note that, the correction amount in the lean stuck learning may be constant regardless of the output air-fuel ratio AFdwn of the downstream side air-fuel ratio sensor 41 which is maintained at the lean air-fuel ratio.

In the example shown in FIG. 9, if the formula (4) is used, the learning value sfbg is decreased at the time $t_1$. As a result, the actual air-fuel ratio of the inflowing exhaust gas changes to the rich side. Due to this, after the time $t_1$, the deviation of the actual air-fuel ratio of the inflowing exhaust gas from the target air-fuel ratio becomes smaller, compared with before the time $t_1$. Therefore, after the time $t_1$, the difference between the broken line which shows the actual air-fuel ratio and the one-dot chain line which shows the target air-fuel ratio becomes smaller than the difference before the time $t_1$.

FIG. 9 shows the example where the gain $k_2$ is set to relatively small value. Therefore, even if the learning value sfbg is updated at the time $t_1$, the deviation remains in the output air-fuel ratio of the upstream side air-fuel ratio sensor 40. In particular, in the example shown in the figure, after the time $t_1$, the actual air-fuel ratio of the inflowing exhaust gas remains to be the lean air-fuel ratio. As a result, in the illustrated example, after the time $t_1$, the output air-fuel ratio AFdwn of the downstream side air-fuel ratio sensor 41 is maintained at the lean air-fuel ratio for the lean air-fuel ratio maintenance judgement time Tlean. Therefore, in the example shown in the figure, at the time $t_2$, due to the lean stuck learning, the learning value sfbg is corrected by using the above formula (4).

If, at the time $t_2$, the learning value sfbg is corrected, the deviation of the actual air-fuel ratio of the inflowing exhaust gas, from the target air-fuel ratio, becomes smaller. Due to this, in the example shown in the figure, after the time $t_2$, the actual air-fuel ratio of the exhaust gas becomes slightly richer than the stoichiometric air-fuel ratio. Along with this, the output air-fuel ratio AFdwn of the downstream side air-fuel ratio sensor 41 changes from the lean air-fuel ratio to substantially the stoichiometric air-fuel ratio. In particular, in the example shown in FIG. 9, from the time $t_2$ to the time $t_3$, the output air-fuel ratio AFdwn of the downstream side air-fuel ratio sensor 41 is maintained at substantially the stoichiometric air-fuel ratio, that is, in the intermediate region M, for the stoichiometric air-fuel ratio maintenance judgement time Tsto. Therefore, at the time $t_3$, by the stoichiometric air-fuel ratio stuck_learning, the learning value sfbg is corrected by using the above formula (2).

By updating the learning value sfbg in this way by lean stuck learning control and stoichiometric air-fuel ratio stuck learning control, it is possible to switch the target air-fuel ratio even if the deviation of the output air-fuel ratio AFup of the upstream side air-fuel ratio sensor 40 is extremely large.

Note that, in the above embodiment, the lean air-fuel ratio maintenance judgement time Tlean is a predetermined time. In this case, the lean air-fuel ratio maintenance judgement time Tlean is set to equal to or greater than the delayed response time of the downstream side air-fuel ratio sensor which is usually taken from when switching the target air-fuel ratio to the rich air-fuel ratio to when the output air-fuel ratio of the downstream side air-fuel ratio sensor 41 changes. Specifically, it is preferably set to two times to four times of that time. Further, the lean air-fuel ratio maintenance judgement time Tlean is shorter than the time usually taken from when switching the target air-fuel ratio to the rich air-fuel ratio to when the absolute value of the cumulative oxygen excess/deficiency $\Sigma$OED reaches the maximum storable oxygen amount of the unused upstream side exhaust purification catalyst 20. Therefore, the lean air-fuel ratio maintenance judgement time Tlean is set shorter than the above-mentioned stoichiometric air-fuel ratio maintenance judgement time Tsto.

Alternatively, the lean air-fuel ratio maintenance judgement time Tlean may be changed in accordance with another parameter, such as the exhaust gas flow amount which is cumulatively added from when the target air-fuel ratio is switched to the rich air-fuel ratio. Specifically, for example, the larger the cumulative exhaust gas flow amount $\Sigma$Ge, the shorter the lean air-fuel ratio maintenance judgement time Tlean is set. Due to this, when the cumulative exhaust gas flow from when switching the target air-fuel ratio to the rich air-fuel ratio becomes a given amount (for example, $\Sigma$Gesw in FIG. 9), the above-mentioned learning value sfbg can be updated. Further, in this case, the given amount has to be equal to or greater than the total amount of flow of the exhaust gas which is required from when switching the target air-fuel ratio to when the output air-fuel ratio of the downstream side air-fuel ratio sensor 41 changes according to the switch. Specifically, it is preferably set to an amount of 2 to 4 times of that total flow.

Next, rich stuck learning control will be explained. The rich stuck learning control is control similar to the lean stuck learning control, and is learning control which is performed when although the target air-fuel ratio is set to the lean air-fuel ratio, the air-fuel ratio detected by the downstream side air-fuel ratio sensor 41 is stuck at the rich air-fuel ratio. In rich stuck learning control, it is judged whether the output air-fuel ratio AFdwn of the downstream side air-fuel ratio sensor 41 is maintained at the rich air-fuel ratio for at least a predetermined rich air-fuel ratio maintenance judgement time (similar to lean air-fuel ratio maintenance judgement time), after switching the air-fuel ratio correction amount AFC to the lean set correction amount AFClean, i.e., after switching the target air-fuel ratio to the lean set air-fuel ratio. Further, when maintained at the rich air-fuel ratio for the rich air-fuel ratio maintenance judgement time or more, the learning value sfbg is increased so that the air-fuel ratio of the inflowing exhaust gas changes to the lean side. That is, in rich stuck learning control, control is performed with rich and lean reversed from the above lean stuck learning control.

Note that, in rich stuck learning control, the following formula (5) is used to calculate the learning value sfbg and the above formula (3) is used to correct the control center air-fuel ratio AFR based on the learning value sfbg.

$$\mathtt{sfbg(n)=sfbg(n-1)+k_3\times(AFClean-(AFdwn-14.6))\ \ldots(5)}$$

Note that, in the above formula (5), $k_3$ is the gain ($0 < k_3 \leq 1$) showing the extent of correction of the control center air-fuel ratio AFR. The larger the value of the gain $k_3$, the larger the correction amount of the control center air-fuel ratio AFR. Note that, the correction amount in rich stuck learning may be made constant regardless of the output air-fuel ratio AFdwn of the downstream side air-fuel ratio sensor 41 when maintained at the rich air-fuel ratio.

Further, the lean stuck learning control and rich stuck learning control may also be applied to other air-fuel ratio control different from the above-mentioned basic air-fuel ratio control. The "other air-fuel ratio control" is, for example, control in which the target air-fuel ratio is switched to the rich air-fuel ratio when the output air-fuel ratio of the downstream side air-fuel ratio sensor 41 becomes the lean judged air-fuel ratio or more, and the target air-fuel ratio is switched to the lean air-fuel ratio when the output air-fuel ratio of the downstream side air-fuel ratio sensor 41 becomes the rich judged air-fuel ratio or less.

Further, in the above embodiment, the control center air-fuel ratio AFR is corrected based on the learning value sfbg. However, another parameter relating to feedback control based on the output air-fuel ratio of the upstream side air-fuel ratio sensor 40 may be corrected based on the learning value sfbg. As the other parameter, for example, the amount of feed of fuel to the inside of a combustion chamber 5, the output air-fuel ratio of the upstream side air-fuel ratio sensor 40, the air-fuel ratio correction amount AFC, etc. may be mentioned.

Therefore, if expressing these together, in the present embodiment, when the target air-fuel ratio is set to a first side of one of the rich side and lean side from the stoichiometric air-fuel ratio by the air-fuel ratio control means, if it is judged that the air-fuel ratio of the outflowing exhaust gas is maintained at a second side at the opposite side from the first side from the stoichiometric air-fuel ratio for a predetermined air-fuel ratio maintenance judgment time or more, the learning means corrects a parameter relating to feedback control based on the output air-fuel ratio of the upstream side air-fuel ratio sensor 40 so that the actual air-fuel ratio of the inflowing exhaust gas changes to the first side as "stuck learning".

<Fuel Cut Control>

Further, in the internal combustion engine of the present embodiment, at the time of deceleration of the vehicle mounting the internal combustion engine, etc. fuel cut control is performed for stopping the injection of fuel from the fuel injector 11 to stop the feed of fuel into the combustion chamber 5 during operation of the internal combustion engine. This fuel cut control is started when a predetermined condition for start of fuel cut stands. For example, fuel cut control is performed when the amount of depression of the accelerator pedal 42 is zero or substantially zero (that is, engine load is zero or substantially zero) and the engine speed is equal to or greater than a predetermined speed higher than the speed at the time of idling.

When fuel cut control is performed, air or exhaust gas similar to air is exhausted from the internal combustion engine, and therefore gas with an extremely high air-fuel ratio (that is, extremely high lean degree) flows into the upstream side exhaust purification catalyst 20. As a result, during fuel cut control, a large amount of oxygen flows into the upstream side exhaust purification catalyst 20, and the oxygen storage amount of the upstream side exhaust purification catalyst 20 reaches the maximum storable oxygen amount.

Further, the fuel cut control is made to end if a predetermined condition for ending the fuel cut stands. As the condition for ending the fuel cut, for example, the amount of depression of the accelerator pedal 42 becoming a predetermined value or more (that is, the engine load becoming a certain extent of value) or the engine speed becoming equal to or less than a predetermined speed higher than the speed at the time of idling, etc. may be mentioned. Further, in the internal combustion engine of the present embodiment, right after the end of the fuel cut control, post-return rich control is performed which makes the air-fuel ratio of the exhaust gas flowing into the upstream side exhaust purification catalyst 20 a post-return rich air-fuel ratio which is richer than the rich set air-fuel ratio. Due to this, it is possible to quickly release the oxygen stored in the upstream side exhaust purification catalyst 20 during fuel cut control.

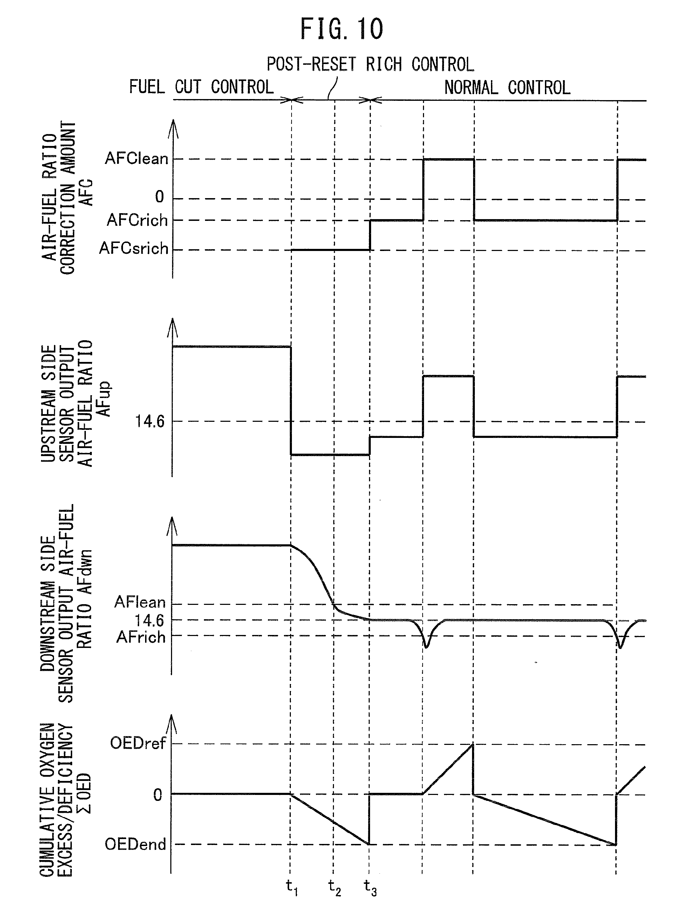

FIG. 10 is a time chart of the air-fuel ratio correction amount AFC, the output air-fuel ratio AFup of the upstream side air-fuel ratio sensor 40, the output air-fuel ratio AFdwn of the downstream side air-fuel ratio sensor 41, and the cumulative oxygen excess/deficiency $\Sigma$OED when performing fuel cut control.

In the illustrated example, fuel cut control is performed before the time $t_1$. Due to the fuel cut control, the oxygen storage amount of the upstream side exhaust purification catalyst 20 becomes maximum and the inflowing exhaust gas and the outflowing exhaust gas become substantially the air. For this reason, before the time $t_1$, the output air-fuel ratio AFup of the upstream side air-fuel ratio sensor 40 and the output air-fuel ratio AFdwn of the downstream side air-fuel ratio sensor 41 are extremely large values.

After that, if at the time $t_1$ fuel cut control is ended, post-reset rich control is performed to discharge the large amount of oxygen which was stored in the upstream side exhaust purification catalyst 20 during the fuel cut control. In post-reset rich control, the air-fuel ratio correction amount AFC is set to a strong rich set correction amount AFCsrich richer than the rich set correction amount AFCrich. That is, the target air-fuel ratio is set to a strong rich set air-fuel ratio richer than the rich set air-fuel ratio. Along with this, the output air-fuel ratio AFup of the upstream side air-fuel ratio sensor 40 becomes the lean air-fuel ratio (in actuality, a delay occurs from when the target air-fuel ratio is switched to when the air-fuel ratio of the inflowing exhaust gas changes, but in the illustrated example, for convenience, it is deemed that they change simultaneously). Further, the output air-fuel ratio AFdwn of the downstream side air-fuel ratio sensor 41 changes to the rich side toward the stoichiometric air-fuel ratio.

The output air-fuel ratio AFdwn of the downstream side air-fuel ratio sensor 41 becomes smaller than the lean judged air-fuel ratio AFlean at the time $t_2$ in the post-reset rich control. As explained above, when the output air-fuel ratio AFdwn of the downstream side air-fuel ratio sensor 41 is smaller than the lean judged air-fuel ratio AFlean and is larger than the rich judged air-fuel ratio AFrich, it is judged that the air-fuel ratio of the outflowing exhaust gas is substantially the stoichiometric air-fuel ratio. Therefore, at the time $t_2$, it is judged that the air-fuel ratio of the outflowing exhaust gas has become substantially the stoichiometric air-fuel ratio. Note that, when the output air-fuel ratio AFdwn of the downstream side air-fuel ratio sensor 41 actually becomes the stoichiometric air-fuel ratio, it is possible to judge that the air-fuel ratio of the outflowing exhaust gas has become the stoichiometric air-fuel ratio.

If at the time $t_1$ post-reset rich control is started, the calculation of the cumulative oxygen excess/deficiency $\Sigma$OED is started. In post-reset rich control, the cumulative oxygen excess/deficiency $\Sigma$OED gradually decreases. At the time $t_3$, if the cumulative oxygen excess/deficiency $\Sigma$OED reaches the control end reference value OEDend, the post-reset rich control is made to end. Further, at this time, the cumulative oxygen excess/deficiency $\Sigma$OED is reset to zero.

The absolute value of the control end reference value OEDend is set sufficiently lower than the maximum storable oxygen amount Cmax when the upstream side exhaust purification catalyst 20 is new. For this reason, usually, at the time of end of post-reset rich control, oxygen remains in the upstream side exhaust purification catalyst 20, so the unburned gas contained in the inflowing exhaust gas is removed by the upstream side exhaust purification catalyst 20 and the output air-fuel ratio AFdwn of the downstream side air-fuel ratio sensor 41 becomes the stoichiometric air-fuel ratio.

At the time $t_3$, normal control such as shown in FIG. 5 is resumed. At this time, the output air-fuel ratio AFdwn of the downstream side air-fuel ratio sensor 41 has not reached the rich judged air-fuel ratio AFrich, so the air-fuel ratio correction amount AFC is made the rich set correction amount AFCrich. Therefore, the target air-fuel ratio is set to the rich set air-fuel ratio. In normal control after the time $t_3$, in the same way as the control shown in FIG. 5, the target air-fuel ratio is alternately switched between the rich set air-fuel ratio and the lean set air-fuel ratio.

Note that, due to deviation of the output air-fuel ratio AFup of the upstream side air-fuel ratio sensor 40, deterioration of the upstream side exhaust purification catalyst 20, etc. sometimes the output air-fuel ratio AFdwn of the downstream side air-fuel ratio sensor 41 reaches the rich judged air-fuel ratio AFrich before the cumulative oxygen excess/deficiency $\Sigma$OED reaches the control end reference value OEDend. In this case, the post-reset rich control is made to end when the output air-fuel ratio AFdwn of the downstream side air-fuel ratio sensor 41 reaches the rich judged air-fuel ratio AFrich. If the post-reset rich control ends, normal control is resumed and, at the time of resumption, the target air-fuel ratio is set to the lean set air-fuel ratio. After that, the target air-fuel ratio is alternately switched between the lean set air-fuel ratio and the rich set air-fuel ratio.

<Abnormal Response Delay of Downstream Side Air-Fuel Ratio Sensor>

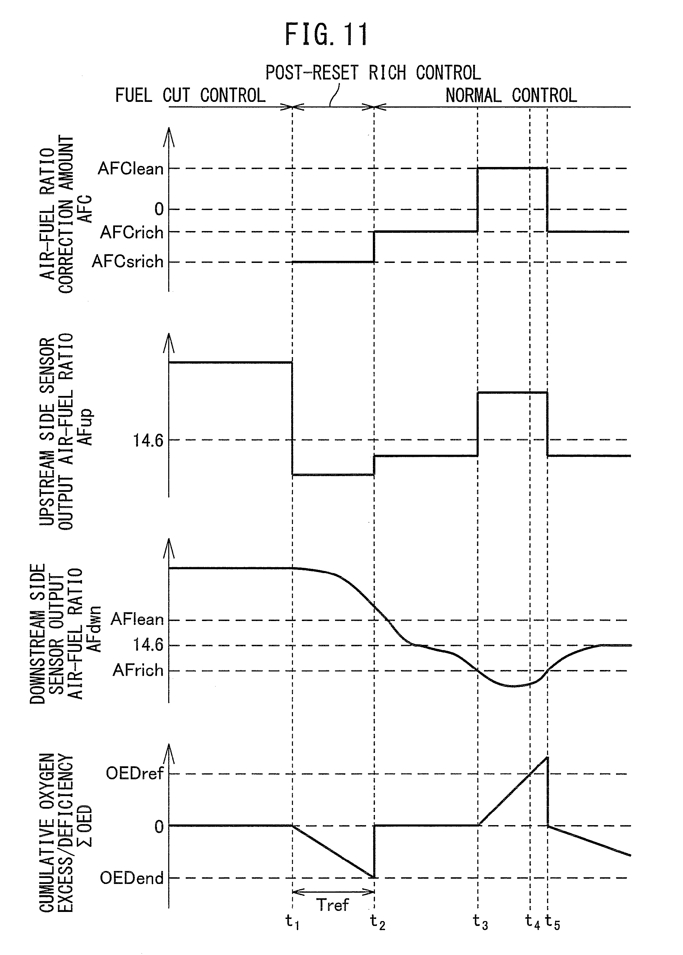

In this regard, the air-fuel ratio sensors 40, 41 sometimes gradually deteriorate along with use and change in response characteristics. Below, referring to FIG. 11, the case where the downstream side air-fuel ratio sensor 41 exhibits abnormal response delay will be explained. FIG. 11 is a time chart of the air-fuel ratio correction amount AFC, the output air-fuel ratio AFup of the upstream side air-fuel ratio sensor 40, the output air-fuel ratio AFdwn of the downstream side air-fuel ratio sensor 41, and cumulative oxygen excess/deficiency $\Sigma$OED when performing fuel cut control when the downstream side air-fuel ratio sensor 41 exhibits abnormal response delay.

FIG. 11 is a view similar to FIG. 10. In the illustrated example, the air-fuel ratio correction amount AFC, the output air-fuel ratio AFup of the upstream side air-fuel ratio sensor 40, and the cumulative oxygen excess/deficiency $\Sigma$OED follow the same trend as the example of FIG. 10 until the time $t_2$. On the other hand, in the example of FIG. 11, unlike the example of FIG. 10, the output air-fuel ratio AFdwn of the downstream side air-fuel ratio sensor 41 does not reach the lean judged air-fuel ratio AFlean until the post-reset rich control is ended.

In the example of FIG. 11, if at the time $t_3$ the output air-fuel ratio AFdwn of the downstream side air-fuel ratio sensor 41 reaches the rich judged air-fuel ratio AFrich, the target air-fuel ratio is switched from the rich set air-fuel ratio to the lean set air-fuel ratio. After that, at the time $t_4$, the cumulative oxygen excess/deficiency $\Sigma$OED reaches the switching reference value OEDref. However, at this time, the output air-fuel ratio AFdwn of the downstream side air-fuel ratio sensor 41 is a value richer than the rich judged air-fuel ratio AFrich. Therefore, at the time $t_4$, the air-fuel ratio of the outflowing exhaust gas may be richer than the stoichiometric air-fuel ratio, so the target air-fuel ratio is not switched to the rich set air-fuel ratio but is maintained at the lean set air-fuel ratio.

After that, at the time $t_5$, the output air-fuel ratio AFdwn of the downstream side air-fuel ratio sensor 41 becomes greater than the rich judged air-fuel ratio AFrich. Therefore, at the time $t_5$, it is judged that the air-fuel ratio of the outflowing exhaust gas has become the stoichiometric air-fuel ratio and the target air-fuel ratio is switched from the lean set air-fuel ratio to the rich set air-fuel ratio.

<Abnormality Judging Means>

The internal combustion engine of the present embodiment comprises an abnormality judging means for judging if the downstream side air-fuel ratio sensor 41 exhibits abnormal response delay. The abnormality judging means judges that the downstream side air-fuel ratio sensor 41 exhibits abnormal response delay when, at the time of end of fuel cut control, the time from when the target air-fuel ratio is set to an air-fuel ratio richer than the stoichiometric air-fuel ratio to when it is judged that the air-fuel ratio of the outflowing exhaust gas has become the stoichiometric air-fuel ratio is a predetermined reference time Tref or more.

The reference time Tref is for example made the time of execution of post-reset rich control, that is, the time usually taken from when the target air-fuel ratio is set to the strong rich set air-fuel ratio to when the cumulative oxygen excess/deficiency ΣOED reaches the control end reference value OEDend. Therefore, in the example of FIG. 10, it is judged that the downstream side air-fuel ratio sensor 41 does not exhibit abnormal response delay, while in the example of FIG. 11, it is judged that the downstream side air-fuel ratio sensor 41 exhibits abnormal response delay.

<Problem in Abnormal Response Delay of Downstream Side Air-Fuel Ratio Sensor>

As explained above, when the output air-fuel ratio AFdwn of the downstream side air-fuel ratio sensor 41 is maintained at the lean air-fuel ratio over a predetermined lean air-fuel ratio maintenance judgment time or more from when the target air-fuel ratio was switched to the rich set air-fuel ratio, a parameter relating to feedback control is corrected as "lean stuck learning". Further, when the output air-fuel ratio AFdwn of the downstream side air-fuel ratio sensor 41 is maintained at the rich air-fuel ratio over a predetermined rich air-fuel ratio maintenance judgment time or more from when the target air-fuel ratio was switched to the lean set air-fuel ratio, a parameter relating to feedback control is corrected as "rich stuck learning". However, even if no deviation occurs in the output air-fuel ratio of the upstream side air-fuel ratio sensor 40, abnormal response delay of the downstream side air-fuel ratio sensor 41 sometimes causes lean stuck learning or rich stuck learning to be mistakenly performed.

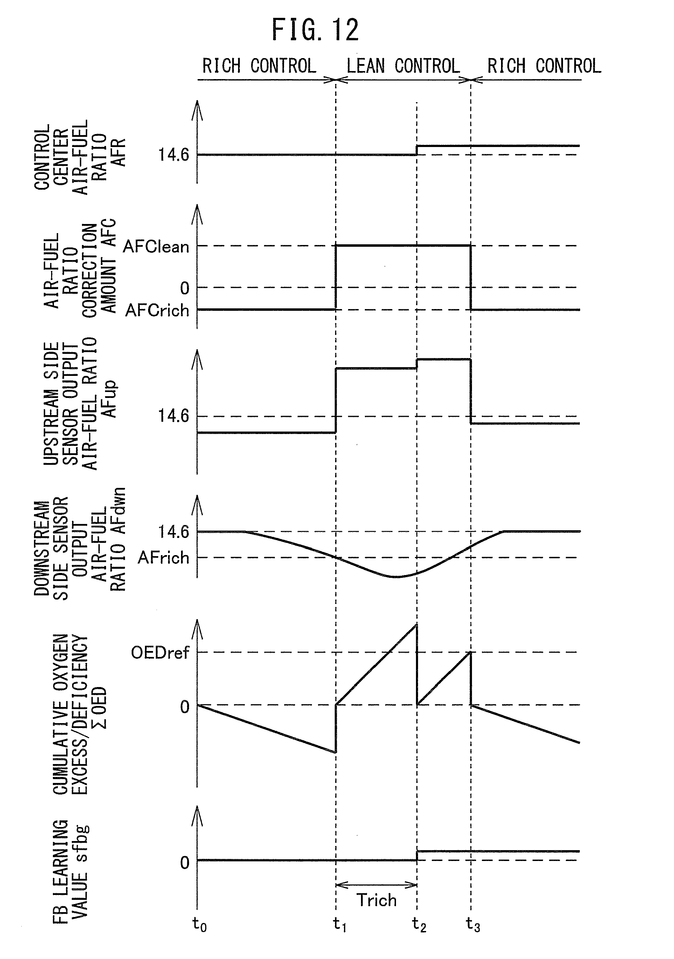

Below, referring to FIG. 12, such a phenomenon will be specifically explained. FIG. 12 is a time chart of the control center air-fuel ratio AFR, the air-fuel ratio correction amount AFC, the output air-fuel ratio AFup of the upstream side air-fuel ratio sensor 40, the output air-fuel ratio AFdwn of the downstream side air-fuel ratio sensor 41, the cumulative oxygen excess/deficiency ΣOED, and learning value sfbg when performing basic air-fuel ratio control when the downstream side air-fuel ratio sensor exhibits abnormal response delay.

In the illustrated example, between the time $t_0$ to the time $t_1$, the air-fuel ratio correction amount AFC is made the rich set correction amount AFCrich (corresponding to rich set air-fuel ratio). Therefore, the target air-fuel ratio is made the rich set air-fuel ratio. If at the time $t_1$ the output air-fuel ratio AFdwn of the downstream side air-fuel ratio sensor 41 reaches the rich judged air-fuel ratio AFrich, the target air-fuel ratio is switched from the rich set air-fuel ratio to the lean set air-fuel ratio.

In the example of FIG. 12, after the time $t_1$, the cumulative oxygen excess/deficiency ΣOED reaches the switching reference value OEDref. However, at this time, the output air-fuel ratio AFdwn of the downstream side air-fuel ratio sensor 41 has not reached the rich judged air-fuel ratio AFrich, so the target air-fuel ratio is not switched to the rich set air-fuel ratio but is maintained at the lean set air-fuel ratio.

After that, at the time $t_2$, the elapsed time from when switching the target air-fuel ratio to the lean set air-fuel ratio becomes the rich air-fuel ratio maintenance judgment time Trich. At this time, the output air-fuel ratio AFdwn of the downstream side air-fuel ratio sensor 41 has not reached the rich judged air-fuel ratio AFrich. For this reason, at the time $t_2$, it is judged that the air-fuel ratio of the outflowing exhaust gas is maintained at the rich side from the stoichiometric air-fuel ratio for the rich air-fuel ratio maintenance judgment time Trich or more and rich stuck learning is performed. At rich stuck learning, the learning value sfbg is corrected so that the air-fuel ratio of the inflowing exhaust gas changes to the lean side. Specifically, the above formula (4) is used to calculate the learning value sfbg and the above formula (3) is used to correct the control center air-fuel ratio AFR based on the learning value sfbg. Note that, the cumulative oxygen excess/deficiency ΣOED is reset to zero at the time $t_2$.

In the example of FIG. 12, at the time $t_2$, the learning value sfbg is made to increase. As a result, the air-fuel ratio of the inflowing exhaust gas deviates to the lean side from the target air-fuel ratio. Therefore, due to abnormal response delay of the downstream side air-fuel ratio sensor 41, the learning value sfbg is updated to a mistaken value.

In the example of FIG. 12, after the time $t_2$, the output air-fuel ratio AFdwn of the downstream side air-fuel ratio sensor 41 becomes larger than the rich judged air-fuel ratio AFrich. After this, if at the time $t_3$ the cumulative oxygen excess/deficiency ΣOED reaches the switching reference value OEDref, the target air-fuel ratio is switched from the lean set air-fuel ratio to the rich set air-fuel ratio.

<Stuck Learning When Abnormal Response Delay Occurs in Downstream Side Air-Fuel Ratio Sensor>

In the present embodiment, to keep mistaken stuck learning from causing deterioration of the exhaust emission, the correction amount of a parameter in stuck learning when it is judged that the downstream side air-fuel ratio sensor 41 exhibits abnormal response delay is made smaller than the correction amount of a parameter in stuck learning when it is judged that the downstream side air-fuel ratio sensor 41 does not exhibit abnormal response delay.

For example, the gain $k_2$ in the above formula (4) and the gain $k_3$ in the above formula (5) are made smaller when it is judged that the downstream side air-fuel ratio sensor 41 exhibits abnormal response delay compared to when it is judged that the downstream side air-fuel ratio sensor 41 does not exhibit abnormal response delay. For example, when it is judged that the downstream side air-fuel ratio sensor 41 exhibits abnormal response delay, the gain $k_2$ and the gain $k_3$ are made 0.01, while when it is judged that the downstream side air-fuel ratio sensor 41 does not exhibit abnormal response delay, the gain $k_2$ and the gain $k_3$ are made 0.1. As a result, when it is judged that the downstream side air-fuel ratio sensor 41 exhibits abnormal response delay, the update amount of the learning value sfbg is made relatively smaller and in turn the correction amount of the control center air-fuel ratio AFR is made relatively smaller.

As a result, when no deviation occurs in the output air-fuel ratio of the upstream side air-fuel ratio sensor 40, even if abnormal response delay of the downstream side air-fuel ratio sensor 41 causes the learning value sfbg to be updated to a mistaken value, the deviation of the actual air-fuel ratio of the inflowing exhaust gas from the target air-fuel ratio can be made smaller. On the other hand, when deviation of output air-fuel ratio of the upstream side air-fuel ratio sensor 40 causes the output air-fuel ratio AFdwn of the downstream side air-fuel ratio sensor 41 to be maintained at the rich side or lean side from the stoichiometric air-fuel ratio, it is possible to compensate for the deviation of the output air-fuel ratio of the upstream side air-fuel ratio sensor 40 a little at a time. Therefore, according to the internal combustion engine of the present embodiment, deterioration of the exhaust emission can be suppressed even when the downstream side air-fuel ratio sensor 41 exhibits abnormal response delay.

<Control Routine of Processing for Correcting Learning Update Amount>

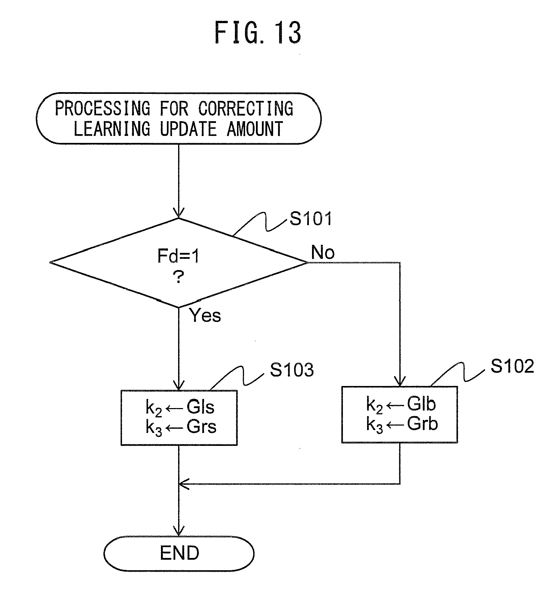

Next, referring to the flow chart of FIG. 13, the control routine for performing this control will be explained. FIG. 13 is a flow chart showing a control routine of processing for correcting the learning update amount. The illustrated control routine is executed by interruption every predetermined time interval.

First, at step S101, it is judged whether the abnormal response delay judgment flag Fd is "1". The abnormal response delay judgment flag Fd is a flag which is set to "1" when the abnormality judging means judges that the downstream side air-fuel ratio sensor 41 exhibits abnormal response delay.

Whether the downstream side air-fuel ratio sensor 41 exhibits abnormal response delay is judged, for example, after fuel cut control by the above-mentioned method. Note that, this judgment may be performed by another method as well. For example, it is also possible to judge that the downstream side air-fuel ratio sensor 41 exhibits abnormal response delay when the maximum value of the slope of the output air-fuel ratio AFdwn of the downstream side air-fuel ratio sensor 41 which changes from the rich side of the stoichiometric air-fuel ratio toward the stoichiometric air-fuel ratio after the target air-fuel ratio is switched from the rich set air-fuel ratio to the lean set air-fuel ratio. Further, when the abnormal response delay judgment flag Fd is made "1", an alarm lamp may be turned on to inform the abnormality to the user.

If at step S101 it is judged that the abnormal response delay judgment flag Fd is "0", the routine proceeds to step S102. At step S102, the gain $k_2$ in the above formula (4) is made a predetermined value Glb and the gain $k_3$ in the above formula (5) is made a predetermined value Grb. The predetermined value Glb and predetermined value Grb are for example 0.1. Note that, the predetermined value Glb and the predetermined value Grb may be made different values. After step S102, the control routine is ended.

On the other hand, if at step S101 it is judged that the abnormal response delay judgment flag Fd is "1", the routine proceeds to step S103. At step S103, the gain $k_2$ at the above formula (4) is made a predetermined value Gls and the gain $k_3$ at the above formula (5) is made a predetermined value Grs. The predetermined value Gls and predetermined value Grs are values smaller than the predetermined value Glb and predetermined value Grb, for example, are 0.01. Note that, the predetermined value Gls and the predetermined value Grs may also be made different values. After step S103, the control routine is ended.

<Second Embodiment>

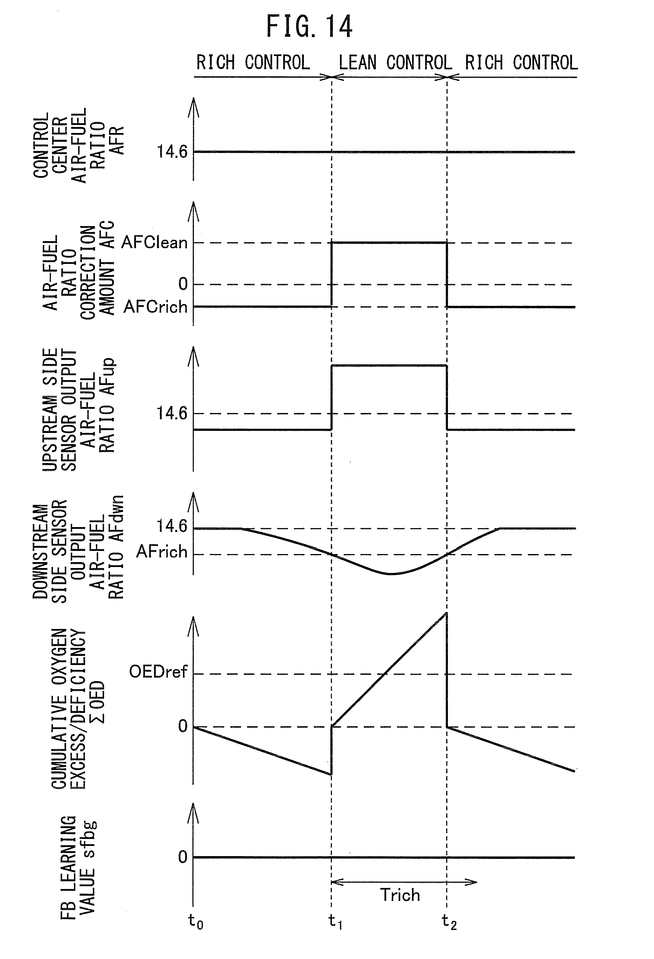

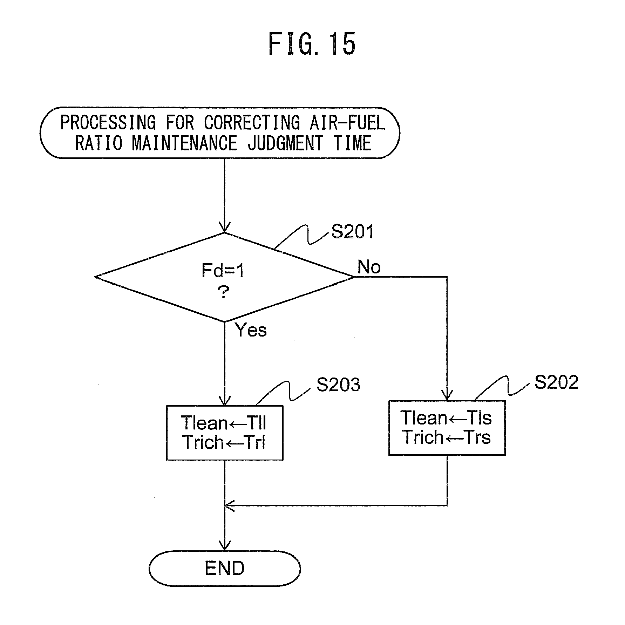

Next, referring to FIG. 14 and FIG. 15, a second embodiment of the present disclosure will be explained. Note that, the configuration and control of the internal combustion engine of the second embodiment are basically similar to the internal combustion engine of the first embodiment, so in the following explanation, mainly parts different from the first embodiment will be explained.

In the second embodiment, the air-fuel ratio maintenance judgment time when it is judged that the downstream side air-fuel ratio sensor 41 exhibits abnormal response delay is made longer than the air-fuel ratio maintenance judgment time when it is judged that the downstream side air-fuel ratio sensor 41 does not exhibit abnormal response delay. Due to this, if there is no deviation in the output air-fuel ratio of the upstream side air-fuel ratio sensor 40, it is possible to keep abnormal response delay of the downstream side air-fuel ratio sensor 41 from causing the learning value sfbg to be updated to a mistaken value.

Below, referring to the time chart of FIG. 14, this control will be specifically explained. FIG. 14 is a view, similar to FIG. 12, showing a time chart of the control center air-fuel ratio AFR etc.

In the illustrated example, the control center air-fuel ratio AFR etc. follow the same trends as the example of FIG. 12 up to the time $t_1$. On the other hand, in the example of FIG. 14, the rich air-fuel ratio maintenance judgment time Trich is made longer than the example of FIG. 12. The rich air-fuel ratio maintenance judgment time Trich in FIG. 14 is made the time taken from when the target air-fuel ratio is switched to the lean set air-fuel ratio to when the output air-fuel ratio AFdwn of the downstream side air-fuel ratio sensor 41 exhibiting abnormal response delay reaches the rich judged air-fuel ratio AFrich or is made more.

In the example of FIG. 14, after the time $t_1$, the cumulative oxygen excess/deficiency $\Sigma$OED reaches the switching reference value OEDref. However, at this time, the output air-fuel ratio AFdwn of the downstream side air-fuel ratio sensor 41 does not reach the rich judged air-fuel ratio AFrich, so the target air-fuel ratio is not switched to the rich set air-fuel ratio but is maintained at the lean set air-fuel ratio.

After that, if, at the time $t_2$, the output air-fuel ratio AFdwn of the downstream side air-fuel ratio sensor 41 becomes larger than the rich judged air-fuel ratio AFrich, the target air-fuel ratio is switched from the lean set air-fuel ratio to the rich set air-fuel ratio. Therefore, the target air-fuel ratio is switched from the lean set air-fuel ratio to the rich set air-fuel ratio before the elapsed time from when switching the target air-fuel ratio to the lean set air-fuel ratio reaches the rich air-fuel ratio maintenance judgment time Trich. As a result, even if the downstream side air-fuel ratio sensor 41 exhibits abnormal response delay, the learning value sfbg is not updated when no deviation occurs in output air-fuel ratio of the upstream side air-fuel ratio sensor 40.

On the other hand, when deviation of the output air-fuel ratio of the upstream side air-fuel ratio sensor 40 causes the output air-fuel ratio AFdwn of the downstream side air-fuel ratio sensor 41 to be maintained at the richer side from the stoichiometric air-fuel ratio over the rich air-fuel ratio maintenance judgment time Trich or more, the learning value sfbg is updated and deviation of the output air-fuel ratio of the upstream side air-fuel ratio sensor 40 can be compensated for. Therefore, according to the internal combustion engine of the second embodiment, it is possible to suppress deterioration of the exhaust emission even when the downstream side air-fuel ratio sensor 41 exhibits abnormal response delay.

<Control Routine of Processing for Correcting Air-Fuel Ratio Maintenance Judgment Time>

Next, referring to the flow chart of FIG. 15, the control routine for performing such control will be explained. FIG. 15 is a flow chart which shows the control routine of processing for correcting the air-fuel ratio maintenance judgment time. The illustrated control routine is executed by interruption every predetermined time interval.

First, at step S201, it is judged whether the abnormal response delay judgment flag Fd is "1". Step S201 is similar to step S101 in FIG. 13, so the explanation will be omitted.

If at step S201 it is judged that the abnormal response delay judgment flag Fd is "0", the routine proceeds to step S202. At step S202, the lean air-fuel ratio maintenance judgment time Tlean is made the predetermined value Tls while the rich air-fuel ratio maintenance judgment time Trich is made the predetermined value Trs. The predetermined value Tls and predetermined value Trs are for example 10 seconds. Note that, the predetermined value Tls and predetermined value Trs may be made different values. After step S202, the present control routine is ended.

On the other hand, if at step S201 it is judged that the abnormal response delay judgment flag Fd is "1", the routine proceeds to step S203. At step S203, the lean air-fuel ratio maintenance judgment time Tlean is made the predetermined value Tll while the rich air-fuel ratio maintenance judgment time Trich is made the predetermined value Trl. The predetermined value Tll and predetermined value Trl are longer than the predetermined value Tls and predetermined value Trs, for example, are 100 seconds. Note that, the predetermined value Tll and predetermined value Trl may also be made different values. After step S203, the present control routine is ended.

Note that, all of the above-mentioned control operations are controlled by the ECU 31 of the internal combustion engine 100.

Above, preferable embodiments according to the present invention were explained, but the present invention is not limited to these embodiments and can be corrected and changed in various ways within the scope of the claims. For example, the first embodiment and the second embodiment of the present disclosure can be worked combined. Specifically, the correction amount of the parameter at the stuck learning when the abnormality judging means judges that the downstream side air-fuel ratio sensor 41 exhibits abnormal response delay is made smaller than the correction amount of the parameter in stuck learning when it judges that the downstream side air-fuel ratio sensor 41 does not exhibit abnormal response delay, and the air-fuel ratio maintenance judgment time when the abnormality judging means judges that the downstream side air-fuel ratio sensor 41 exhibits abnormal response delay is made longer than the air-fuel ratio maintenance judgment time when it judges that the downstream side air-fuel ratio sensor 41 does not exhibit abnormal response delay.

Reference Signs List

1.    engine body
5.    combustion chamber
7.    intake port
9.    exhaust port
13.    intake runner
14.    surge tank
18.    throttle valve
19.    exhaust manifold
20.    upstream side exhaust purification catalyst
24.    downstream side exhaust purification catalyst
31.    ECU
40.    upstream side air-fuel ratio sensor
41.    downstream side air-fuel ratio sensor

**Claims**

1.    An internal combustion engine comprising:

an exhaust purification catalyst (20) arranged in an exhaust passage and able to store oxygen,
an upstream side air-fuel ratio sensor (40) arranged at an upstream side of the exhaust purification catalyst (20) in a direction of exhaust flow and configured to detect an air-fuel ratio of inflowing exhaust gas flowing into the exhaust purification catalyst (20),
a downstream side air-fuel ratio sensor (41) arranged at a downstream side of the exhaust purification catalyst (20) in the direction of exhaust flow and configured to detect an air-fuel ratio of outflowing exhaust gas flowing out from the exhaust purification catalyst (20),
an air-fuel ratio control means configured to set a target air-fuel ratio of the inflowing exhaust gas and to control by feedback an amount of fuel fed to a combustion chamber (5) so that an air-fuel ratio detected by the upstream side air-fuel ratio sensor (40) matches the target air-fuel ratio,
a learning means configured to correct a parameter relating to the feedback control based on the air-fuel ratio detected by the downstream side air-fuel ratio sensor (41) so that a deviation in the feedback control between the target air-fuel ratio and an actual air-fuel ratio of the inflowing exhaust gas is reduced, and
an abnormality judging means configured to judge whether the downstream side air-fuel ratio sensor (41) exhibits abnormal response delay, wherein
when the air-fuel ratio control means sets the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, the learning means is configured to correct a parameter so that the actual air-fuel ratio of the inflowing exhaust gas changes to the first side as stuck learning, and
to make a correction amount of the parameter at the stuck learning, when the abnormality judging means judges that the downstream side air-fuel ratio sensor (41) exhibits abnormal response delay, smaller than a correction amount of the parameter in the stuck learning, when the abnormality judging means judges that the downstream side air-fuel ratio sensor (41) does not exhibit abnormal response delay.

2. An internal combustion engine comprising:

an exhaust purification catalyst (20) arranged in an exhaust passage and able to store oxygen,
an upstream side air-fuel ratio sensor (40) arranged at an upstream side of the exhaust purification catalyst (20) in a direction of exhaust flow and configured to detect an air-fuel ratio of inflowing exhaust gas flowing into the exhaust purification catalyst (20),
a downstream side air-fuel ratio sensor (41) arranged at a downstream side of the exhaust purification catalyst (20) in the direction of exhaust flow and configured to detect an air-fuel ratio of outflowing exhaust gas flowing out from the exhaust purification catalyst (20),
an air-fuel ratio control means configured to set a target air-fuel ratio of the inflowing exhaust gas and to control by feedback an amount of fuel fed to a combustion chamber (5) so that an air-fuel ratio detected by the upstream side air-fuel ratio sensor (40) matches the target air-fuel ratio,
a learning means configured to correct a parameter relating to the feedback control based on the air-fuel ratio detected by the downstream side air-fuel ratio sensor (41) so that a deviation in the feedback control between the target air-fuel ratio and an actual air-fuel ratio of the inflowing exhaust gas is reduced, and
an abnormality judging means configured to judge whether the downstream side air-fuel ratio sensor (41) exhibits abnormal response delay, wherein
when the air-fuel ratio control means sets the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, the learning means is configured to correct a parameter so that the actual air-fuel ratio of the inflowing exhaust gas changes to the first side as stuck learning, and
to make the air-fuel ratio maintenance judgment time, when the abnormality judging means judges that the downstream side air-fuel ratio sensor (41) exhibits abnormal response delay, longer than the air-fuel ratio maintenance judgment time, when the abnormality judging means judges that the downstream side air-fuel ratio sensor (41) does not exhibit abnormal response delay.

3. The internal combustion engine according to claim 1 or 2 wherein

the air-fuel ratio control means is configured to set the target ratio to an air-fuel ratio richer than the stoichiometric air-fuel ratio at a time of an end of fuel cut control when the feed of fuel to a combustion chamber (5) is ended, and
the abnormality judging means is configured to judge that the downstream side air-fuel ratio sensor (41) exhibits abnormal response delay, if a time from when the target air-fuel ratio is set to the rich air-fuel ratio to when the air-fuel ratio of the outflowing exhaust gas becomes the stoichiometric air-fuel ratio is a predetermined reference time or more.

4. A method of controlling an internal combustion engine comprising:

an exhaust purification catalyst (20) arranged in an exhaust passage and able to store oxygen,
an upstream side air-fuel ratio sensor (40) arranged at an upstream side of the exhaust purification catalyst (20) in the direction of exhaust flow and configured to detect an air-fuel ratio of inflowing exhaust gas flowing into the exhaust purification catalyst (20),
a downstream side air-fuel ratio sensor (41) arranged at a downstream side of the exhaust purification catalyst (20) in the direction of exhaust flow and configured to detect an air-fuel ratio of outflowing exhaust gas flowing out from the exhaust purification catalyst (20),

the method comprising the steps of:

setting a target air-fuel ratio of the inflowing exhaust gas and controlling by feedback an amount of fuel feed fed to a combustion chamber (5) so that an air-fuel ratio detected by the upstream side air-fuel ratio sensor (40) matches the target air-fuel ratio,
correcting a parameter relating to the feedback control based on the air-fuel ratio detected by the downstream side air-fuel ratio sensor (41) so that a deviation in the feedback control between the target air-fuel ratio and an actual air-fuel ratio of the inflowing exhaust gas is reduced, and

judging whether the downstream side air-fuel ratio sensor (41) exhibits abnormal response delay, wherein when setting the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, a parameter is corrected so that the actual air-fuel ratio of the inflowing exhaust gas changes to the first side as stuck learning, and

a correction amount of the parameter at the stuck learning, when it is judged that the downstream side air-fuel ratio sensor (41) exhibits abnormal response delay, is made smaller than a correction amount of the parameter in the stuck learning, when it is judged that the downstream side air-fuel ratio sensor (41) does not exhibit abnormal response delay.

5.  A method of controlling an internal combustion engine comprising:

an exhaust purification catalyst (20) arranged in an exhaust passage and able to store oxygen,

an upstream side air-fuel ratio sensor (40) arranged at an upstream side of the exhaust purification catalyst (20) in the direction of exhaust flow and configured to detect an air-fuel ratio of inflowing exhaust gas flowing into the exhaust purification catalyst (20),

a downstream side air-fuel ratio sensor (41) arranged at a downstream side of the exhaust purification catalyst (20) in the direction of exhaust flow and configured to detect an air-fuel ratio of outflowing exhaust gas flowing out from the exhaust purification catalyst (20),

the method comprising the steps of:

setting a target air-fuel ratio of the inflowing exhaust gas and controlling by feedback an amount of fuel feed fed to a combustion chamber (5) so that an air-fuel ratio detected by the upstream side air-fuel ratio sensor (40) matches the target air-fuel ratio,

correcting a parameter relating to the feedback control based on the air-fuel ratio detected by the downstream side air-fuel ratio sensor (41) so that a deviation in the feedback control between the target air-fuel ratio and an actual air-fuel ratio of the inflowing exhaust gas is reduced, and

judging whether the downstream side air-fuel ratio sensor (41) exhibits abnormal response delay, wherein when setting the target air-fuel ratio to a first side of either of a rich side and lean side from a stoichiometric air-fuel ratio, if it is judged that the air-fuel ratio of the outflowing exhaust gas is maintained at a second side at an opposite side to the first side from the stoichiometric air-fuel ratio for a predetermined air-fuel ratio maintenance judgment time or more, a parameter is corrected so that the actual air-fuel ratio of the inflowing exhaust gas changes to the first side as stuck learning, and

the air-fuel ratio maintenance judgment time, when it is judged that the downstream side air-fuel ratio sensor (41) exhibits abnormal response delay, is made longer than the air-fuel ratio maintenance judgment time, when it is judged that the downstream side air-fuel ratio sensor (41) does not exhibit abnormal response delay.

6.  The method according to claim 4 or 5 wherein

the target ratio is set to an air-fuel ratio richer than the stoichiometric air-fuel ratio at the time of the end of fuel cut control when the feed of fuel to a combustion chamber (5) is ended, and

it is judged that the downstream side air-fuel ratio sensor (41) exhibits abnormal response delay, if a time from when the target air-fuel ratio is set to the rich air-fuel ratio to when the air-fuel ratio of the outflowing exhaust gas becomes the stoichiometric air-fuel ratio is a predetermined reference time or more.

# FIG. 1

# FIG. 2

(A)

(B)

# FIG. 3

# FIG. 4

# FIG. 5

# FIG. 6

AIR-FUEL RATIO CORRECTION AMOUNT AFC

AFClean

0

AFCrich

UPSTREAM SIDE SENSOR OUTPUT AIR-FUEL RATIO AFup

ACTUAL AIR-FUEL RATIO

14.6

OXYGEN STORAGE AMOUNT OSA

Cmax

Cref

0

CUMULATIVE OXYGEN EXCESS/DEFICIENCY $\Sigma$OED

OEDref

0

DOWNSTREAM SIDE SENSOR OUTPUT AIR-FUEL RATIO AFdwn

14.6

AFrich

$t_1$

# FIG. 7

# FIG. 8

CONTROL CENTER AIR-FUEL RATIO AFR

14.6

Tsto ⟷ Tsto

AIR-FUEL RATIO CORRECTION AMOUNT AFC

AFClean
0
AFCrich

UPSTREAM SIDE SENSOR OUTPUT AIR-FUEL RATIO AFup

ACTUAL AIR-FUEL RATIO

14.6

TARGET AIR-FUEL RATIO

OXYGEN STORAGE AMOUNT OSA

Cmax
Cref
0

CUMULATIVE OXYGEN EXCESS/DEFICIENCY ∑OED

OEDref
0
OEDsw

DOWNSTREAM SIDE SENSOR OUTPUT AIR-FUEL RATIO AFdwn

AFlean
14.6
AFrich

M

FB LEARNING VALUE sfbg

0

$t_1$   $t_2$   $t_3$  $t_4$ $t_5$   $t_6$

32

# FIG. 9

# FIG. 10

# FIG. 11

# FIG. 12

RICH CONTROL | LEAN CONTROL | RICH CONTROL

CONTROL CENTER AIR-FUEL RATIO AFR — 14.6

AIR-FUEL RATIO CORRECTION AMOUNT AFC — AFClean, 0, AFCrich

UPSTREAM SIDE SENSOR OUTPUT AIR-FUEL RATIO AFup — 14.6

DOWNSTREAM SIDE SENSOR OUTPUT AIR-FUEL RATIO AFdwn — 14.6, AFrich

CUMULATIVE OXYGEN EXCESS/DEFICIENCY ΣOED — OEDref, 0

FB LEARNING VALUE sfbg — 0

Trich

$t_0$  $t_1$  $t_2$  $t_3$

36

# FIG. 13

PROCESSING FOR CORRECTING
LEARNING UPDATE AMOUNT

$Fd=1$
? — S101

No

Yes

$k_2 \leftarrow Gls$
$k_3 \leftarrow Grs$ — S103

$k_2 \leftarrow Glb$
$k_3 \leftarrow Grb$ — S102

END

# FIG. 14

RICH CONTROL | LEAN CONTROL | RICH CONTROL

CONTROL CENTER AIR-FUEL RATIO AFR

14.6

AIR-FUEL RATIO CORRECTION AMOUNT AFC

AFClean

0

AFCrich

UPSTREAM SIDE SENSOR OUTPUT AIR-FUEL RATIO AFup

14.6

DOWNSTREAM SIDE SENSOR OUTPUT AIR-FUEL RATIO AFdwn

14.6

AFrich

CUMULATIVE OXYGEN EXCESS/DEFICIENCY $\Sigma$ OED

OEDref

0

FB LEARNING VALUE sfbg

0

Trich

$t_0$    $t_1$    $t_2$

# FIG. 15

PROCESSING FOR CORRECTING AIR-FUEL
RATIO MAINTENANCE JUDGMENT TIME

S201

Fd=1
?

No

Yes

S203

Tlean←Tll
Trich←Trl

S202

Tlean←Tls
Trich←Trs

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014118892 A
- JP 63302161 A
- JP 63306248 A
- JP 2006077659 A